(19) **Europäisches Patentamt**
**European Patent Office**
**Office européen des brevets**

(11) **EP 4 727 042 A1**

(12) # EUROPEAN PATENT APPLICATION
published in accordance with Art. 153(4) EPC

(43) Date of publication:
**15.04.2026 Bulletin 2026/16**

(21) Application number: **23944620.6**

(22) Date of filing: **10.07.2023**

(51) International Patent Classification (IPC):
**H04L 1/00** (2006.01)

(52) Cooperative Patent Classification (CPC):
**H04L 1/00**

(86) International application number:
**PCT/CN2023/106638**

(87) International publication number:
**WO 2025/010597 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• **MA, Qianli**
**Shenzhen, Guangdong 518129 (CN)**
• **HUANG, Huang**
**Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **SIGNAL TRANSMISSION METHOD AND COMMUNICATION APPARATUS**

(57) Embodiments of this application provide a signal transmission method and a communication apparatus. The method includes: receiving a data signal and a DMRS, obtaining, based on the data signal and the DMRS, a symbol carried in the data signal, determining a power offset proportion coefficient between the data signal and the DMRS; and further, during demodulation, determining, based on the power offset proportion coefficient, a constellation point corresponding to the symbol. In this way, an offset between a coordinate point corresponding to the symbol in a constellation diagram and an actual constellation point corresponding to the symbol in the constellation diagram may be reduced based on the power offset proportion coefficient, to reduce a probability that the symbol is incorrectly determined as another constellation point, that is, reduce a bit error rate in a data signal transmission process.

```
                First apparatus                    Second apparatus
                      │                                   │
                      │         S801: Generate a data signal and a DMRS, where
                      │         the data signal is a data signal on which clipping
                      │         processing is performed
                      │
                      │         S802: Determine a power offset proportion
                      │         coefficient between the data signal and the DMRS
                      │
                      │◄─── S803: Send the data signal and the DMRS ───
                      │◄─ ─ ─ ─ S807: Indication information ─ ─ ─ ─ ─
                      │
    S804: Obtain, based on the data signal and the
    DMRS, a symbol carried in the data signal
                      │
    S805: Determine the power offset proportion
    coefficient between the data signal and the DMRS
                      │
    S806: Determine, based on the power offset
    proportion coefficient, a constellation point
    corresponding to the symbol
```

FIG. 8

Processed by Luminess, 75001 PARIS (FR)

EP 4 727 042 A1

**Description**

**TECHNICAL FIELD**

This application relates to the communication field, and in particular, to a signal transmission method and a communication apparatus.

**BACKGROUND**

During data signal transmission between a transmit end and a receive end, the receive end may learn of modulation information (for example, a modulation and coding scheme (modulation and coding scheme, MCS)) used when the transmit end sends a data signal, so that the receive end may demodulate the received data signal based on the modulation information. To improve sensing performance, in a process of sending the data signal, the transmit end processes a frequency domain waveform of the data signal, for example, increases an amplitude of a part, with a low amplitude, of the frequency domain waveform, to reduce fluctuations of the frequency domain waveform of the signal.

However, when the receive end demodulates the data signal on which clipping processing is performed, a bit error rate increases. Therefore, how to reduce a bit error rate in a data signal transmission process is an urgent problem to be resolved currently.

**SUMMARY**

Embodiments of this application provide a signal transmission method and a communication apparatus, to reduce a bit error rate in a data signal transmission process.

To achieve the foregoing objective, this application uses the following technical solutions.

According to a first aspect, a signal transmission method is provided. The method may be performed by a first apparatus, or may be performed by a component of the first apparatus, for example, a processor, a chip, or a chip system of the first apparatus, or may be implemented by a logical module or software that can implement all or some functions of the first apparatus. The following uses an example in which the method is performed by the first apparatus for description. The method includes: receiving a data signal and a demodulation reference signal DMRS from a second apparatus; obtaining, based on the data signal and the DMRS, a symbol carried in the data signal; and determining a power offset proportion between the data signal and the DMRS, and determining, based on the power offset proportion coefficient, a constellation point corresponding to the symbol.

In this embodiment of this application, when demodulating the symbol carried in the data signal, the first apparatus determines, based on the power offset proportion coefficient between the data signal and the DMRS, the constellation point corresponding to the symbol, so that an offset between a coordinate point corresponding to the symbol in a constellation diagram and an actual constellation point corresponding to the symbol in the constellation diagram can be reduced based on the power offset proportion coefficient, to reduce a probability that the symbol is incorrectly determined as another constellation point. Therefore, according to the signal transmission method provided in this embodiment of this application, a bit error rate in a data signal transmission process can be reduced.

According to a second aspect, a signal transmission method is provided. The method may be performed by a second apparatus, or may be performed by a component of the second apparatus, for example, a processor, a chip, or a chip system of the second apparatus, or may be implemented by a logical module or software that can implement all or some functions of the second apparatus. The following uses an example in which the method is performed by the second apparatus for description. The method includes: generating a data signal and a demodulation reference signal DMRS; determining a power offset proportion coefficient between the data signal and the DMRS; and further sending the data signal and the DMRS based on the power offset proportion coefficient, where the data signal is a data signal on which clipping processing is performed.

It may be understood that, because an interference symbol is introduced in the clipping processing, for the data signal on which clipping processing is performed, a transmit power of the data signal is different from a transmit power of a physical data channel (for example, a physical downlink shared channel (physical downlink shared channel, PDSCH) or a physical uplink shared channel (physical uplink shared channel, PUSCH)) carrying the data signal. In other words, a transmit power offset between the data signal and the DMRS is not equal to an inherent energy per resource element EPRE ratio of the physical data channel to the DMRS. Further, the difference between the transmit power of the data signal and the transmit power of the physical data channel carrying the data signal causes an offset between a coordinate point corresponding to a modulated symbol carried in the data signal in the constellation diagram and an actual constellation point corresponding to the modulated symbol. Consequently, the offset also exists in a symbol obtained by a receive end when the receive end receives the data signal. This increases a probability of incorrect determining during demodulation by the receive end.

In this embodiment of this application, the second apparatus may determine the power offset proportion coefficient between the data signal and the DMRS, and send the data signal and the DMRS based on the power offset proportion coefficient. In this way, the receive end may demodulate the data signal based on the power offset proportion coefficient. To be specific, when determining the constellation point corresponding to the symbol carried in the data signal, the receive end may reduce, based on the power offset proportion coefficient, the offset between the coordinate point corresponding to the symbol in the constellation diagram and the actual constellation point corresponding to the symbol in the constellation diagram, to reduce a probability that the symbol is incorrectly determined as another constellation point. Therefore, according to the signal transmission method provided in this embodiment of this application, a bit error rate in a data signal transmission process can be reduced.

With reference to the first aspect or the second aspect, in a possible implementation, the power offset proportion coefficient may indicate a transmit power ratio of the data signal to the physical data channel carrying the data signal. For example, the transmit power of the physical channel carrying the data signal is 10 power units. After floor clipping processing is performed on the data signal, the transmit power ratio of the data signal to the physical data channel carrying the data signal is 7/10. In other words, the power offset proportion coefficient may be 7/10.

With reference to the first aspect or the second aspect, in a possible implementation, the power offset proportion coefficient may be less than or equal to 1, or may be greater than 1. For example, the clipping processing is to amplify a waveform with a small amplitude in a frequency domain waveform. In this case, an actual transmit power of the data signal is reduced. Therefore, a value range of the power offset proportion coefficient is (0, 1). For another example, the clipping processing is to reduce a waveform with a large amplitude in a frequency domain waveform. In this case, an actual transmit power of the data signal may be increased. Therefore, a value of the power offset proportion coefficient may be greater than 1. Further, the value corresponding to the power offset proportion coefficient may be a quantized value, for example, 0.33 or -4.77 dB.

With reference to the first aspect or the second aspect, in a possible implementation, the power offset proportion coefficient may be a transmit power ratio of the data signal to the DMRS. It may be understood that, when a quantity of DMRS CDM groups without data is 1, the transmit power of the physical data channel is the same as a transmit power of the DMRS, so that the transmit power of the physical data channel carrying the data signal may be represented by the DMRS. In other words, the power offset proportion coefficient may be the transmit power ratio of the data signal to the DMRS.

Further, in another possible implementation, the power offset proportion coefficient may be an EPRE ratio of the data signal to the DMRS. It may be understood that, the transmit power of the physical data channel and the transmit power of the DMRS are equal to the EPRE ratio of the transmit power of the physical data channel to the DMRS. Therefore, when a quantity of DMRS CDM groups without data is 1, the power offset proportion coefficient may be the EPRE ratio of the data signal to the DMRS.

With reference to the first aspect or the second aspect, in a possible implementation, the power offset proportion coefficient is a logarithmic value, and the power offset proportion coefficient may be a difference between the transmit power ratio and a preconfigured transmit power ratio; or the power offset proportion coefficient is a linear value, and the power offset proportion coefficient is a ratio of the transmit power ratio to the preconfigured transmit power ratio. The transmit power ratio is the transmit power ratio of the data signal to the DMRS, and the preconfigured transmit power ratio is a transmit power ratio of the physical data channel carrying the data signal to the DMRS. It may be understood that, because the transmit power ratio of the physical data channel to the DMRS is the EPRE ratio of the physical data channel to the DMRS, the preconfigured transmit power ratio may alternatively be expressed as that the preconfigured transmit power is the EPRE ratio of the physical data channel carrying the data signal to the DMRS. For example, the transmit power ratio of the data signal to the DMRS is: the transmit power of the data signal/the transmit power of the DMRS=1/4 (that is, 0.25). When the quantity of DMRS CDM groups without data is equal to 2, the preconfigured transmit power ratio is -3 dB (that is, 0.5), that is, the transmit power of the PDSCH carrying the data signal/the transmit power of the DMRS=1/2 (that is, 0.5). Therefore, the power offset proportion coefficient is a ratio between the two, that is, 0.25/0.5=0.5. It may be understood that, if a logarithmic value is used for representation, the power offset proportion coefficient is a difference between the two, that is, -6 dB-(-3 dB)=-3 dB. In other words, the transmit power ratio of the data signal to the DMRS may include two parts: the power offset proportion coefficient and the preconfigured transmit power ratio. Further, because the transmit power ratio of the data signal to the DMRS is equal to the EPRE ratio of the data signal to the DMRS, the power offset proportion may be a part of the EPRE ratio of the data signal to the DMRS.

With reference to the first aspect or the second aspect, in a possible implementation, the power offset proportion coefficient is a logarithmic value, and the power offset proportion coefficient may be a difference between a first EPRE ratio and a second EPRE ratio; or the power offset proportion coefficient is a linear value, and the power offset proportion coefficient may be a ratio of the first EPRE ratio to the second EPRE ratio. The first EPRE ratio is the EPRE ratio of the data signal to the DMRS, and the second EPRE ratio is the EPRE ratio of the physical data channel carrying the data signal to the DMRS. It may be understood that the second EPRE ratio may be an EPRE ratio of a PDSCH to a DMRS or an EPRE ratio of a PUSCH to a DMRS defined in an existing protocol.

Further, in a possible implementation, the first EPRE ratio may be preconfigured or configured. In other words, the power offset proportion coefficient may be added on the basis of the second EPRE ratio, namely, the existing EPRE ratio of the PDSCH or the PUSCH to the DMRS, to define the EPRE ratio of the data signal to the DMRS.

With reference to the first aspect or the second aspect, in a possible implementation, the power offset proportion coefficient may be associated with a transmission parameter used to transmit the data signal. The transmission parameter includes one or more of the following: a modulation and coding scheme MCS used to transmit the data signal, a constellation diagram used to transmit the data signal, a modulation order used to transmit the data signal, or a clipping threshold used to perform clipping processing on the data signal.

With reference to the first aspect or the second aspect, in a possible implementation, the power offset proportion coefficient is in an inverse proportion to the clipping threshold. It may be understood that, during the floor clipping processing, a larger clipping threshold indicates a larger modulus value corresponding to the introduced interference symbol, and therefore, an interference signal corresponding to the interference symbol occupies a larger proportion of the transmit power of the physical data channel carrying the data signal. In this case, the actual transmit power of the data signal is smaller, that is, the transmit power ratio of the data signal to the physical data channel carrying the data signal is smaller, and the power offset proportion coefficient is smaller. It may be further understood that, a smaller clipping threshold indicates a smaller modulus value corresponding to the introduced interference symbol, and therefore, the actual transmit power of the data signal is close to the transmit power of the physical data channel carrying the data signal, that is, the power offset proportion coefficient is larger. Further, a larger clipping threshold indicates a smaller fluctuation of the frequency domain waveform on which clipping processing is performed, and smaller impact on sensing performance.

With reference to the first aspect or the second aspect, in a possible implementation, the power offset proportion coefficient is determined based on the clipping threshold. It may be understood that, during the clipping processing, the modulus value corresponding to the introduced interference symbol may be determined based on the clipping threshold, and the proportion occupied by the interference signal corresponding to the interference symbol in the transmit power of the physical data channel carrying the data signal is determined. Therefore, a reduction proportion of the transmit power of the data signal, namely, the transmit power ratio of the data signal to the physical data channel carrying the data signal or the power offset proportion coefficient, may be determined based on the proportion occupied by the interference signal.

With reference to the first aspect or the second aspect, in a possible implementation, when the modulation order is less than or equal to a first threshold, the power offset proportion coefficient is 1. It may be understood that the power offset proportion coefficient is 1, indicating that the transmit power of the data signal is the same as that of the physical data channel carrying the data signal, that is, no interference symbol is introduced in the clipping processing process. It may be further understood that, if modulus values corresponding to modulated symbols are all greater than the clipping threshold, it means that the modulus values of the modulated symbols are not amplified, and therefore, no interference symbol is introduced in the clipping processing process. Further, when the modulation order is small, frequency domain waveform amplitudes corresponding to different subcarriers in frequency domain are similar, that is, the fluctuation of the frequency domain waveform is small. Therefore, a clipping processing condition can be met, that is, the modulated symbol is not amplified. For example, when the modulation order is 1, there are only two constellation points in the constellation diagram, and Euclidean distance values corresponding to the two constellation points are the same, that is, different modulated symbols correspond to a same modulus value, that is, no fluctuation occurs in the frequency domain waveform. For another example, when the modulation order is 3, there are only eight constellation points in the constellation diagram, a difference between Euclidean distance values corresponding to the constellation points is small, and therefore, the fluctuation in the frequency domain waveform is small.

Further, the first threshold may be 1, 2, 3, 4, or the like. This is not specifically limited in embodiments of this application.

With reference to the first aspect or the second aspect, in a possible implementation, the modulation order is in an inverse proportion to the clipping threshold. In other words, a larger modulation order indicates a smaller clipping threshold, and a smaller modulation order indicates a larger clipping threshold. For example, when the modulation order is 6, that is, 64QAM, the clipping threshold may be 0.2, and a modulus value of a modulated symbol whose corresponding modulus value is less than 0.2 needs to be amplified. When the modulation order is 4, that is, 16QAM, the clipping threshold may be 0.7, and a modulus value of a modulated symbol whose corresponding modulus value is less than 0.7 needs to be amplified. It may be understood that, because the clipping threshold is in an inverse proportion to the power offset proportion coefficient, a larger clipping threshold indicates a larger transmit power occupied by the introduced interference signal, a larger reduction proportion of the actual transmit power of the data signal, and a larger offset between the coordinate point corresponding to the modulated symbol in the constellation diagram and the actual constellation point corresponding to the modulated symbol. However, at different modulation orders, tolerance degrees for the offset are different. For example, a larger modulation order indicates a lower tolerance degree for the offset, and a smaller modulation order indicates a higher tolerance degree for the offset. This is because for a data signal with a large modulation order, a high signal to interference plus noise ratio is required for normal demodulation. If the clipping threshold is excessively large, that is, an interference signal power is high, a large demodulation loss is caused. However, for a data signal with a small modulation order, demodulation can be performed normally even when a signal to interference plus noise ratio is low. In other words, a smaller modulation order indicates a higher tolerance degree for interference introduced in the clipping processing. Therefore, the clipping threshold can be appropriately increased, to reduce impact on the sensing performance.

Further, in a possible implementation, the power offset proportion coefficient is in a direct proportion to the modulation order. In other words, a larger modulation order indicates a larger power offset proportion coefficient, and a smaller modulation order indicates a smaller power offset proportion coefficient.

With reference to the first aspect or the second aspect, in a possible implementation, a target code rate is in an inverse proportion to the clipping threshold. In other words, a higher target code rate indicates a smaller clipping threshold, and a lower target code rate indicates a larger clipping threshold. It may be understood that the target code rate is similar to the modulation order. A lower target code rate indicates a higher tolerance degree for the interference introduced in the clipping processing, and a higher target code rate indicates a lower tolerance degree for the interference introduced in the clipping processing.

Further, in a possible implementation, the power offset proportion coefficient is in a direct proportion to the target code rate. In other words, a higher target code rate indicates a larger power offset proportion coefficient, and a lower target code rate indicates a smaller power offset proportion coefficient.

With reference to the first aspect or the second aspect, in a possible implementation, the MCS is in an inverse proportion to the clipping threshold. A larger MCS index indicates a smaller clipping threshold, and a smaller MCS index indicates a larger clipping threshold.

Further, in a possible implementation, the power offset proportion coefficient is in a direct proportion to the MCS. In other words, a larger MCS index indicates a larger power offset proportion coefficient, and a smaller MCS index indicates a smaller power offset proportion coefficient.

With reference to the first aspect or the second aspect, in a possible implementation, the power offset proportion coefficient is preconfigured. To be specific, the second apparatus may determine, based on a preconfigured power offset proportion coefficient, the power offset proportion coefficient corresponding to the data signal.

Alternatively, in another possible implementation, the power offset proportion coefficient is indicated. For example, the first apparatus is a network device, and the second apparatus is a terminal device. The terminal device may receive indication information from the network device, where the indication information indicates the power offset proportion coefficient between the data signal and the DMRS, so that the terminal device may determine the power offset proportion coefficient, and the terminal device may send the data signal and the DMRS to the network device based on the power offset proportion coefficient. For another example, the first apparatus is a terminal device, and the second apparatus is a network device. The network device may also receive indication information from the terminal device, where the indication information indicates the power offset proportion coefficient between the data signal and the DMRS, so that the network device may determine the power offset proportion coefficient, and the network device may send the data signal and the DMRS to the terminal device based on the power offset proportion coefficient.

With reference to the first aspect, in a possible implementation, that the first apparatus determines the power offset proportion coefficient between the data signal and the DMRS includes: The first apparatus determines the power offset proportion coefficient from a candidate power offset proportion coefficient set based on the transmission parameter. The candidate power offset proportion coefficient set may be a preconfigured power offset proportion coefficient set, or the candidate power offset proportion coefficient set is indicated. Further, the first apparatus may determine the power offset proportion coefficient from the candidate offset proportion coefficient set based on a correspondence between the transmission parameter and the power offset proportion coefficient. For example, the power offset proportion coefficient may be in one-to-one correspondence with a time domain resource and/or a frequency domain resource used to transmit the data signal, and the first apparatus may determine the power offset proportion coefficient based on the time domain resource and/or the frequency domain resource used to transmit the data signal. For another example, the power offset proportion coefficient may be in one-to-one correspondence with the modulation order used to transmit the data signal, so that the first apparatus may determine the power offset proportion coefficient based on the modulation order used to transmit the data signal. For another example, the power offset proportion coefficient may be in one-to-one correspondence with the clipping threshold used to perform clipping processing on the data signal, so that the first apparatus may determine the power offset proportion coefficient based on the clipping threshold.

With reference to the first aspect, in a possible implementation, determining, based on the power offset proportion coefficient, the constellation point corresponding to the symbol includes: adjusting, based on the power offset proportion coefficient, a coordinate point corresponding to the symbol in the constellation diagram, where the constellation diagram is a constellation diagram used to modulate data carried in the data signal; and determining, based on an adjusted coordinate point corresponding to the symbol in the constellation diagram, the constellation point corresponding to the symbol. It may be understood that an offset that needs to be compensated for the symbol may be determined based on the power offset proportion coefficient. For example, the power offset proportion coefficient is 7/10, and the first apparatus may amplify a modulus value or a Euclidean distance value corresponding to the symbol by 10/7 times. In other words, adjusting, based on the power offset proportion coefficient, the coordinate point corresponding to the symbol in the constellation diagram can reduce the offset between the coordinate point corresponding to the symbol in the constellation diagram and the actual constellation point corresponding to the symbol in the constellation diagram, so that a probability that the symbol is incorrectly determined as another constellation point is reduced.

Alternatively, in another possible implementation, determining, based on the power offset proportion coefficient, the constellation point corresponding to the symbol includes: adjusting distribution of constellation points in the constellation diagram based on the power offset proportion coefficient; and determining, based on adjusted distribution of the constellation points in the constellation diagram, the constellation point corresponding to the symbol. It may be understood that the first apparatus may determine the constellation point corresponding to the symbol by adjusting the distribution of the constellation points in the constellation diagram, without adjusting the coordinate point corresponding to the symbol in the constellation diagram. For example, the power offset proportion coefficient is 7/10, and the first apparatus may proportionally reduce a modulus value corresponding to each constellation point in the constellation diagram by 7/10.

With reference to the second aspect, in a possible implementation, the method provided in the second aspect further includes: sending indication information, where the indication information indicates the power offset proportion coefficient. For example, the second apparatus may send the indication information to the first apparatus, to indicate the power offset proportion coefficient between the data signal and the DMRS. It may be understood that, when the second apparatus sends the data signal, the second apparatus may determine the clipping threshold used for the data signal, so that the second apparatus can accurately determine the offset between the coordinate point corresponding to the symbol in the constellation diagram and the actual constellation point corresponding to the symbol. In other words, the power offset proportion coefficient indicated by the second apparatus is more accurate, so that the first apparatus further reduces the offset between the coordinate point corresponding to the symbol in the constellation diagram and the actual constellation point corresponding to the symbol.

With reference to the second aspect, in a possible implementation, the indication information is carried in a radio resource control RRC setup message, an RRC resume message, or an RRC reconfiguration message. In other words, the indication information may directly indicate a value corresponding to the power offset proportion coefficient.

With reference to the second aspect, in another possible implementation, the indication information includes first indication information. The first indication information is used to determine the power offset proportion coefficient from a candidate power offset proportion coefficient set. The candidate power offset proportion coefficient set is preconfigured, or the candidate power offset proportion coefficient set is indicated. It may be understood that the first indication information may be an index of the power offset proportion coefficient in the candidate power offset proportion coefficient set. In other words, the first apparatus may determine the power offset proportion coefficient from the candidate power offset proportion coefficient set based on the first indication information.

With reference to the second aspect, in a possible implementation, the candidate power offset proportion coefficient set is indicated; and the indication information further includes second indication information, and the second indication information indicates the candidate power offset proportion coefficient set. In other words, the candidate power offset proportion coefficient set may be configured for the first apparatus by using the second indication information.

With reference to the second aspect, in a possible implementation, the first indication information is carried in downlink control information DCI or a media access control control element MAC CE, and the second indication information is carried in RRC signaling. In other words, the second apparatus may indicate the power offset proportion coefficient by using the RRC signaling and DCI signaling or by using the RRC signaling and the MAC CE.

According to a third aspect, a communication apparatus is provided, to implement the foregoing methods. The communication apparatus may be the first apparatus in any one of the first aspect or the implementations of the first aspect, or an apparatus including the first apparatus, or an apparatus included in the first apparatus, for example, a chip; or the communication apparatus may be the second apparatus in any one of the second aspect or the implementations of the second aspect, or an apparatus including the second apparatus, or an apparatus included in the second apparatus, for example, a chip. The communication apparatus includes a corresponding module, unit, or means (means) for implementing the foregoing method. The module, the unit, or the means may be implemented by hardware, software, or hardware executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in either of the foregoing aspects and any one of the possible implementations of the foregoing aspects. The transceiver module may include a transceiver circuit, a transceiver machine, a transceiver, or a communication interface. The processing module may be configured to implement a processing function in either of the foregoing aspects and any one of the possible implementations of the foregoing aspects.

In some possible designs, the transceiver module includes a sending module and a receiving module, respectively configured to implement the sending function and the receiving function in either of the foregoing aspects and any one of the possible implementations of the foregoing aspects.

According to a fourth aspect, a communication apparatus is provided. The apparatus includes a processor and a memory. The memory is configured to store computer instructions. When the processor executes the instructions, the communication apparatus is enabled to perform the method in either of the foregoing aspects. The communication apparatus may be the first apparatus in any one of the first aspect or the implementations of the first aspect, or an apparatus including the first apparatus, or an apparatus included in the first apparatus, for example, a chip; or the communication apparatus may be the second apparatus in any one of the second aspect or the implementations of the second aspect, or an apparatus including the second apparatus, or an apparatus included in the second apparatus, for example, a chip.

According to a fifth aspect, a communication apparatus is provided, including a processor and a communication interface. The communication interface is configured to communicate with a module outside the communication apparatus. The processor is configured to execute a computer program or instructions, to enable the communication apparatus to perform the method according to either of the foregoing aspects. The communication apparatus may be the first apparatus in any one of the first aspect or the implementations of the first aspect, or an apparatus including the first apparatus, or an apparatus included in the first apparatus, for example, a chip; or the communication apparatus may be the second apparatus in any one of the second aspect or the implementations of the second aspect, or an apparatus including the second apparatus, or an apparatus included in the second apparatus, for example, a chip.

According to a sixth aspect, a communication apparatus is provided, including at least one processor. The processor is configured to execute a computer program or instructions stored in a memory, to enable the communication apparatus to perform the method in either of the foregoing aspects. The memory may be coupled to the processor, or may be independent of the processor. The communication apparatus may be the first apparatus in any one of the first aspect or the second aspect or the implementations of the first aspect or the second aspect, or an apparatus including the first apparatus, or an apparatus included in the first apparatus, for example, a chip; or the communication apparatus may be the second apparatus in any one of the third aspect or the implementations of the third aspect, or an apparatus including the second apparatus, or an apparatus included in the second apparatus, for example, a chip.

According to a seventh aspect, a computer-readable storage medium is provided. The computer-readable storage medium stores a computer program or instructions. When the computer program or the instructions are run on a communication apparatus, the communication apparatus is enabled to perform the method according to either of the foregoing aspects or any one of the implementations of the foregoing aspects.

According to an eighth aspect, a computer program product including instructions is provided. When the computer program product runs on a communication apparatus, the communication apparatus is enabled to perform the method according to either of the foregoing aspects or any one of the implementations of the foregoing aspects.

According to a ninth aspect, a communication apparatus is provided (for example, the communication apparatus may be a chip or a chip system). The communication apparatus includes a processor, configured to implement the functions in either of the foregoing aspects or any one of the implementations of the foregoing aspects.

In some possible designs, the communication apparatus includes a memory, and the memory is configured to store necessary program instructions and data.

In some possible designs, when the apparatus is a chip system, the apparatus may include a chip, or may include a chip and another discrete device.

It may be understood that, when the communication apparatus provided in any one of the third aspect to the ninth aspect is a chip, the foregoing sending action/function may be understood as an output, and the receiving action/function may be understood as an input.

For technical effect brought by any design manner in the third aspect to the ninth aspect, refer to technical effect brought by different design manners in the first aspect and the second aspect. Details are not described herein again.

According to a tenth aspect, a communication method is provided. The communication method includes the method according to any one of the first aspect or the implementations of the first aspect and the method according to any one of the second aspect or the implementations of the second aspect.

According to an eleventh aspect, a communication system is provided. The communication system includes the first apparatus according to the foregoing aspects and the second apparatus according to the foregoing aspects.

**BRIEF DESCRIPTION OF DRAWINGS**

FIG. 1 is a diagram of a 4QAM constellation diagram according to an embodiment of this application;
FIG. 2 is a diagram of a frequency domain waveform of a signal on which DFT-s-OFDM processing is performed according to an embodiment of this application;
FIG. 3 is a diagram of a modulated symbol on which modulus value amplification processing is performed according to an embodiment of this application;
FIG. 4 is a diagram of a waveform on which modulus value amplification processing is performed according to an embodiment of this application;

FIG. 5 is a diagram of an offset between a coordinate point corresponding to an original modulated symbol in a constellation diagram and an actual constellation point corresponding to the original modulated symbol according to an embodiment of this application;

FIG. 6 is a diagram of a structure of a communication system according to an embodiment of this application;

FIG. 7 is a diagram of a structure of a communication apparatus according to an embodiment of this application;

FIG. 8 is a schematic flowchart of a signal transmission method according to an embodiment of this application;

FIG. 9 is a diagram of a structure of a first apparatus according to an embodiment of this application; and

FIG. 10 is a diagram of a structure of a second apparatus according to an embodiment of this application.

**DESCRIPTION OF EMBODIMENTS**

For ease of understanding of technical solutions provided in embodiments of this application, technologies related to this application are first described briefly. The brief descriptions are as follows:

I. Modulation

Modulation may mean that information (for example, data) is transferred based on a change of a related parameter (for example, an amplitude, a frequency, or a phase) of a carrier, and to-be-sent data (which may be represented by a bit sequence) is mapped to a modulated symbol.

For example, quadrature modulation may be used in a communication system (for example, a new radio (new radio, NR) system or a long term evolution (long term evolution, LTE) system). The quadrature modulation may mean that a transmit end (for example, a network device or a terminal device) modulates data by using two carriers that have a same frequency and that are orthogonal to each other (where for example, a phase difference is 90°), to obtain an orthogonal modulated symbol. The quadrature modulation may also be referred to as IQ modulation, where I may represent an in phase (in phase) component, and Q may represent a quadrature (quadrature) component. In other words, data on which quadrature modulation is performed may include an I component and a Q component that are orthogonal to each other, so that the I component and the Q component may be considered as two dimensions that may be independently detected at a receive end.

For example, the modulated symbol may be represented by a complex value, for example, may be determined by using Formula (1):

$$x = a + i \cdot b = a \cdot cos\omega t + b \cdot sin\omega t \qquad \text{Formula (1)}$$

In Formula (1), $x$ may represent the modulated symbol, $a$ may represent an amplitude of the I component, and $b$ may represent an amplitude of the Q component. An orthogonal frequency division multiplexing (orthogonal frequency division multiplexing, OFDM) technology may be used in both an uplink transmission solution (that is, a terminal device sends data to a network device) and a downlink transmission solution (that is, the network device sends data to the terminal device). Therefore, the modulated symbol $x$ may be a frequency domain symbol mapped to a subcarrier in frequency domain, that is, $a$ and $b$ may represent an amplitude or a power of a frequency domain waveform of a signal carrying the modulated symbol, that is, a modulus value of the modulated symbol $x$ may represent the amplitude or the power of the frequency domain waveform of the signal.

Further, the modulated symbol $x$ may alternatively be represented in a form of a signal, that is, $cos\omega t$ may represent a carrier used during I component modulation, $sin\omega t$ may represent a carrier used during Q component modulation, and $\omega$ represents a frequency of the carrier.

The quadrature modulation may include: binary phase shift keying (binary phase shift keying, BPSK), π/2-BPSK, quadrature phase shift keying (quadrature phase shift keying, QPSK), quadrature amplitude modulation (quadrature amplitude modulation, QAM), or the like. For example, the BPSK may mean that information is transferred based on a phase change of a carrier, and an amplitude and a frequency of the carrier remain unchanged. The QAM may mean that information is transferred based on an amplitude change and a phase change of a carrier, and a frequency of the carrier remains unchanged.

It may be understood that, in the BPSK, one modulated symbol may carry 1 bit (where there are two types in total: "0" and "1"), and there are two different modulated symbols in total. In the QPSK, 2 bits may form a group (there are four types in total: "00", "01", "11", and "10"), one modulated symbol may carry 2 bits, and there are four different modulated symbols in total. In $2^m$QAM, a modulation order is $m$, and one modulated symbol may carry $m$ bits, that is, there are $2^m$ different modulated symbols in total.

For example, in 16QAM, $2^m = 16$, $m = 4$, and therefore, one modulated symbol may carry 4 bits. In 64QAM, $2^m = 64$, $m = 6$, and therefore, one modulated symbol may carry 6 bits.

II. Constellation diagram (constellation diagram)

The constellation diagram may be used to define amplitude information and phase information of the modulated symbol *x,* that is, the modulated symbol may be determined based on a constellation point in the constellation diagram. The constellation diagram includes an I-axis (which, for example, may be a horizontal coordinate axis in the constellation diagram) and a Q-axis (which, for example, may be a vertical coordinate axis in the constellation diagram), and therefore the constellation point may be represented by coordinates.

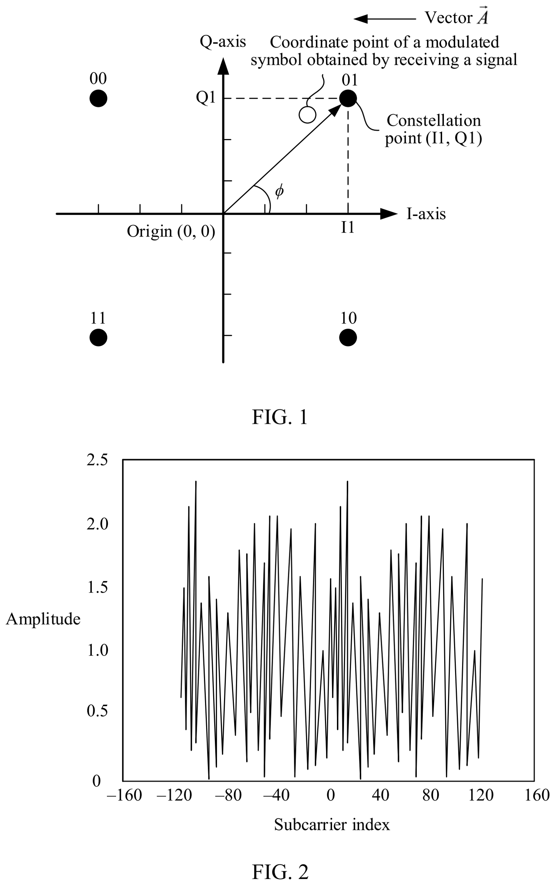

For example, FIG. 1 is a diagram of a 4QAM constellation diagram according to an embodiment of this application. In 4QAM, each modulated symbol may carry 2 bits, that is, $2^m = 4$, and $m = 2$. Therefore, the constellation diagram shown in FIG. 1 may include four constellation points, and each constellation point may carry 2 bits. As shown in FIG. 1, a constellation point (I1, Q1) in an upper right corner of FIG. 1 is used as an example. I1 is a coordinate value of the constellation point on the I-axis, and represents amplitude information of an I component in the modulated symbol. Q1 is a coordinate value of the constellation point on the Q-axis, and represents amplitude information of a Q component in the modulated symbol. A vector $\vec{A}$ whose origin (0, 0) points to the constellation point (I1, Q1) may represent the modulated symbol, and an included angle $\phi$ between the vector $\vec{A}$ and the I-axis may represent phase information corresponding to the modulated symbol.

In other words, the constellation point (I1, Q1) is in one-to-one correspondence with the modulated symbol $x = \dfrac{I1}{E} + i \cdot \dfrac{Q1}{E}$ , so that the modulated symbol may be determined based on the constellation point, where 1/E is a normalization factor corresponding to the modulated symbol, and E is a sum of powers corresponding to four modulated symbols in the constellation diagram.

It may be understood that a distance from the constellation point to the origin (0, 0) may represent a power or a modulus value of the modulated symbol corresponding to the constellation point. A larger distance indicates a larger power or modulus value of the modulated symbol corresponding to the constellation point. The distance may be referred to as a Euclidean distance (Euclidean metric). It may be further understood that a normalized modulus value or a normalized Euclidean distance value corresponding to the modulated symbol may also be represented by the foregoing normalization factor.

Further, each constellation point may correspond to one bit sequence, and the bit sequence may represent to-be-sent data. A correspondence between the to-be-sent data and the modulated symbol may be obtained based on a correspondence between the constellation point in the constellation diagram and the modulated symbol and a correspondence between the constellation point and the bit sequence. For example, the constellation point (I1, Q1) in the upper right corner of FIG. 1 may be in one-to-one correspondence with a bit sequence "01", so that data bits "01" may be modulated as the modulated symbol $x = \dfrac{I1}{E} + i \cdot \dfrac{Q1}{E}$ by using the constellation diagram shown in FIG. 1.

It should be understood that a mapping rule of the correspondence between the constellation point and the bit sequence may be a Gray mapping rule, a natural mapping rule, or the like. This is not specifically limited in embodiments of this application. For the Gray mapping rule or the natural mapping rule, refer to the conventional technology. Details are not described herein again.

In other words, when sending data, a transmit end may modulate the to-be-sent data into a modulated symbol based on a correspondence between the modulated symbol, a constellation point, and the to-be-sent data in the constellation diagram, so that the modulated symbol may be sent in a form of a signal through subcarrier mapping, OFDM processing, and the like. Correspondingly, when receiving the signal, a receive end may demodulate the signal by using the constellation diagram used during modulation, to obtain the data sent by the transmit end. Specifically, the receive end may perform equalization on the received signal to obtain a symbol carried in the signal, where the symbol is a modulated symbol on which spatial transmission is performed, and then determine, based on the constellation diagram used during the modulation, the constellation point corresponding to the symbol, to determine, based on a bit sequence corresponding to the constellation point, the data sent by the transmit end.

It may be understood that, because noise, a non-ideal factor of a transmit end device, or a non-ideal factor of a receive end device exists in a transmission process, the symbol obtained by the receive end by receiving the signal may be distorted with respect to the modulated symbol corresponding to the symbol. Consequently, a coordinate point of the symbol in the constellation diagram may not accurately match an actual constellation point corresponding to the symbol in the constellation diagram, but falls near the actual constellation point corresponding to the symbol. Therefore, the receive end needs to determine, based on a Euclidean distance between the coordinate point corresponding to the symbol in the constellation diagram and the actual constellation point corresponding to the symbol in the constellation diagram, the constellation point corresponding to the symbol.

For example, it is assumed that the coordinate point corresponding to the modulated symbol obtained based on the received signal in the constellation diagram falls in an upper right part (namely, a first quadrant) in FIG. 1, and a distance between the coordinate point and the constellation point (I1, Q1) corresponding to the bit sequence "01" is the shortest. In this case, the receive end may determine that the constellation point corresponding to the modulated symbol is the constellation point (I1, Q1), and further determine that the data sent by the transmit end is the bit sequence "01".

It should be understood that, for ease of description, in embodiments of this application, a signal carrying the modulated symbol is referred to as a data signal. This is uniformly described herein, and details are not described below again.

III. Transmit power of a data signal

According to the technical specification (technical specification, TS) 38.213 in 3rd generation partnership project (3rd generation partnership project, 3GPP) standards, in embodiments of this application, the data signal may be an uplink data signal or a downlink data signal. The uplink data signal may be carried on a physical uplink shared channel (physical uplink shared channel, PUSCH), and the downlink data signal may be carried on a physical downlink shared channel (physical downlink shared channel, PDSCH). A transmit power of the uplink data signal may be equal to a transmit power of the PUSCH, and a transmit power of the downlink data signal may be equal to a transmit power of the PDSCH.

Further, the transmit power of the PUSCH may be configured based on a related parameter configured by a network device, for example, a target receive power corresponding to the PUSCH, an open-loop power control parameter, or a closed-loop power control parameter. For details, refer to the related descriptions of calculating the transmit power of the PUSCH in the technical specification (technical specification, TS) 38.213 in the 3rd generation partnership project (3rd generation partnership project, 3GPP) standards. Details are not described herein again.

Because the PDSCH is demodulated by using a demodulation reference signal (demodulation reference signal, DMRS), and there is a fixed energy per resource element (energy per resource element, EPRE) ratio of the PDSCH to the DMRS, the transmit power of the PDSCH does not need to be separately configured. It should be understood that, when demodulating a non-constant-mode modulated signal (for example, the foregoing QAM modulated signal), the receive end needs to know a transmit power ratio of the data signal to the DMRS, to determine an amplitude of the data signal, so as to perform demodulation. In other words, for the PDSCH, the transmit power of the PDSCH may be determined based on the fixed EPRE and the transmit power of the DMRS corresponding to the PDSCH, and the PDSCH does not need to be separately configured.

It may be understood that, as described in the foregoing related descriptions of the non-constant-mode modulated signal, the uplink data signal may also be demodulated based on a fixed EPRE ratio of the PUSCH to a DMRS.

Further, for a same terminal device, a PDSCH and a DMRS are transmitted on a same antenna port. The antenna port occupied by the PDSCH is indicated by a port allocation indication information field in downlink control information (downlink control information, DCI). Port allocation indication information in the DCI may include an antenna port set occupied by the PDSCH of the terminal device, a quantity of all code division multiplexing (code division multiplexing, CDM) groups that are not used for data transmission on a scheduled resource of the terminal device, and a DMRS configuration type of the terminal device.

It should be understood that, if there are CDM groups that are not used for data transmission other than the CDM groups corresponding to the antenna ports allocated to the terminal device, antenna ports in these CDM groups may belong to other scheduled terminal devices, and the PDSCH of the terminal device is not mapped to a resource element (resource element, RE) occupied by these CDM groups.

It should be further understood that the DMRS of the PUSCH is the same as the DMRS of the PDSCH. For example, the PUSCH is transmitted on the same antenna port as the DMRS, and may also be indicated by the DCI.

Further, a data signal and a DMRS described below refer to a data signal and a DMRS that are transmitted on a same antenna port. This is uniformly described herein, and details are not described below again. It may be understood that the EPRE ratio of the PDSCH to the DMRS and the EPRE ratio of the PUSCH to the DMRS may be determined based on a quantity of DMRS CDM groups and a DMRS configuration type that are indicated in the DCI. The following separately describes a CDM, a DMRS configuration type 1, and a DMRS configuration type 2.

For the CDM, different DMRS ports may be multiplexed in a frequency division multiplexing (frequency division multiplexing, FDM) manner and a code division multiplexing (code division multiplexing, CDM) manner. In other words, in frequency domain, a plurality of subcarriers (namely, a plurality of REs) may be divided into a plurality of CDM groups. The CDM groups are distinguished in the FDM manner (that is, based on REs occupied by different CDM groups), and different CDM groups correspond to different DMRS ports. In code domain, in a same CDM group, an orthogonal cover code (orthogonal cover code, OCC) may be further used for distinguishing, and different OCCs correspond to different DMRS ports.

It should be understood that the CDM groups may be classified into a DMRS CDM group with data and a DMRS CDM group without data. As described above, the DMRS CDM group with data may be used for data transmission of another terminal device, and the DMRS CDM group without data is not used for data transmission, and may be used for data signal demodulation.

For the DMRS configuration type 1, a frequency domain resource occupied by the DMRS is distributed at an interval (which is also referred to as comb (comb) distribution), and the DMRS occupies one of every two REs. In other words, a density of REs occupied by the DMRS is 50%. In every two REs, different REs correspond to different CDM groups. For example, the frequency domain resource occupied by the DMRS is 12 REs, that is, an RE #0 to an RE #11. The RE #0, the RE #2, the RE #4, the RE #6, the RE #8, and the RE #10 belong to a CDM group #0, and the RE #1, the RE #3, the RE #5, the RE #7, the RE #9, and the RE #11 belong to a CDM group #1. The CDM group #0 may correspond to a DMRS port 1000, 1001, 1004, or 1005, and the CDM group #1 may correspond to a DMRS port 1002, 1003, 1006, or 1007.

Further, the CDM group #0 may use different OCCs to distinguish between the DMRS ports 1000, 1001, 1004, and 1005, and the CDM group #1 may use different OCCs to distinguish between the DMRS ports 1002, 1003, 1006, and 1007.

A difference between the DMRS configuration type 2 and the DMRS configuration type 1 lies in that the DMRS occupies RE groups that are spaced by four REs from each other, and each RE group includes two consecutive REs in frequency domain. In other words, a density of REs occupied by the DMRS is 33.3%.

Further, for the DMRS configuration type 2, there are three CDM groups, for example, a CDM group #1 to a CDM group #2. The DMRS port 1000, 1001, 1006, or 1007 may correspond the CDM group #0, the DMRS port 1002, 1003, 1008, or 1009 may correspond the CDM group #1, and the DMRS port 1004, 1005, 1010, or 1011 may correspond the CDM group #2.

It may be understood that, for further descriptions of time-domain mapping of the DMRS, the DMRS configuration type 1, and the DMRS configuration type 2, refer to the related descriptions in TS 38.214. Details are not described herein again.

The following uses the downlink data signal as an example to describe a transmit power ratio of the downlink data signal to a DMRS.

For example, Table 1 shows an EPRE ratio that is of a PDSCH to a DMRS and that corresponds to the DMRS configuration type 1 and an EPRE ratio that is of a PDSCH to a DMRS and that corresponds to the DMRS configuration type 2 in a case of different quantities of DMRS CDM groups without data (DMRS CDM groups without data) that are specified in TS 38.214. The following separately provides descriptions.

For the DMRS configuration type 1:

As shown in Table 1, when the quantity of DMRS CDM groups without data is 1, it may be determined that all DMRS ports are centralized in the CDM group. In this case, the EPRE ratio is 0 dB, that is, transmit powers of the data signal and the DMRS are the same.

When the quantity of DMRS CDM groups without data is 2, because FDM is performed between CDM groups, a DMRS port in each CDM group may borrow a power from another CDM group that multiplexes the DMRS port, to increase EPRE by 3 dB. In other words, a transmit power of the data signal is half of a transmit power of a DMRS of a corresponding port, that is, -3 dB.

When the quantity of DMRS CDM groups without data is 2, because FDM is performed between CDM groups, a DMRS port in each CDM group may borrow a power from another CDM group that multiplexes the DMRS port, to increase EPRE by 3 dB. In other words, a transmit power of the data signal is half of a transmit power of a DMRS of a corresponding port, that is, -3 dB.

For the DMRS configuration type 2:

As shown in Table 1, for cases in which quantities of DMRS CDM groups without data are 1 and 2, refer to the corresponding descriptions of the DMRS configuration type 1. Details are not described herein again.

When the quantity of DMRS CDM groups without data is 3, because FDM is performed between CDM groups, a DMRS port in each CDM group may borrow a power from the other two CDM groups that multiplex the DMRS port, to increase EPRE by 4.77 dB. In other words, a transmit power of the data signal is 1/3 of a transmit power of a DMRS of a corresponding port, that is, -4.77 dB.

Table 1

| Quantity of DMRS CDM groups without data | DMRS configuration type 1 | DMRS configuration type 2 |
|---|---|---|
| 1 | 0 dB | 0 dB |
| 2 | -3 dB | -3 dB |
| 3 | - | -4.77 dB |

It may be understood that a configuration of the EPRE ratio of the PUSCH to the DMRS is the same as that shown in Table 1. For details, refer to Table 6.2.2-1 in TS 38.214. Details are not described herein again.

IV. Sensing

Sensing may mean that a communication entity (for example, a network device or a terminal device) in a wireless network obtains information about an ambient environment by sending and receiving a signal on which an object performs an action. The information about the ambient environment may include information about one or more objects in the environment. The information about the object may include a location, a shape, a speed, or the like of the object. The object may change a transmission feature of the signal, for example, may change a transmission direction of the signal, change a transmission gain of the signal, change a transmission delay of the signal, or change a frequency of the signal. Therefore, the communication entity may implement sensing by obtaining a change of the transmission feature of the signal. For example, channel response information obtained through channel estimation may be used to feed back a change of the signal after the signal passes through different transmission environments (also referred to as channels). Therefore, when the signal passes through the object, the channel response information is used to feed back a change of the object on the transmission feature of the signal.

For example, the channel response information may include a channel frequency response (channel frequency response, CFR) or channel state information (channel state information, CSI). This is not specifically limited in embodiments of this application.

It should be understood that the "signal on which the object performs the action" may include a signal reflected by the object, a signal refracted by the object, a signal scattered by the object, a signal diffracted by the object, a signal transmitted by the object, or the like. This is not specifically limited in embodiments of this application.

Further, the signal may be a signal on which OFDM processing is performed, for example, a signal on which orthogonal frequency division multiplexing using a cyclic prefix (conventional OFDM using a cyclic prefix, CP-OFDM) processing is performed, or a signal on which discrete Fourier transform-spread orthogonal frequency division multiplexing (discrete Fourier transform-spread OFDM, DFT-s-OFDM) processing is performed. The signal on which DFT-s-OFDM processing is performed has a low peak-to-average power ratio (peak-to-average power ratio, PAPR) of a waveform, can meet a coverage requirement, and is applicable to a sensing service.

It should be understood that, a frequency domain waveform of a multi-carrier superposed signal on which processing similar to OFDM processing is performed may have a large fluctuation. For example, FIG. 2 is a diagram of a frequency domain waveform of the signal on which DFT-s-OFDM processing is performed. As shown in FIG. 2, a horizontal coordinate is a subcarrier index (including 240 subcarriers), and a vertical coordinate is an amplitude corresponding to the subcarrier. The frequency domain waveform shown in FIG. 2 has a large fluctuation, which is not conducive to sensing. Specific reasons are as follows.

As described above, for both the CFR and the CSI, impact of a channel on a transmitted signal is described from a perspective of the frequency domain. A relationship between a received signal and a sent signal in frequency domain may be expressed by using Formula (2):

$$Y[k] = H[k]X[k] + N[k] \qquad \text{Formula (2)}$$

$k$ represents a subcarrier, $Y[k]$ represents a frequency domain amplitude of a received signal corresponding to the subcarrier $k$, $X[k]$ represents a frequency domain amplitude of a sent signal corresponding to the subcarrier $k$, $N[k]$ represents a frequency domain amplitude of noise corresponding to the subcarrier $k$, and $H[k]$ represents a channel frequency domain response corresponding to the subcarrier $k$, namely, channel response information that needs to be solved.

Further, for a subcarrier with a small amplitude in FIG. 2, $X[k]$ in Formula (2) is small, and therefore $Y[k]$ is small. In this case, $Y[k]$ needs to be amplified during solution of $H[k]$. However, amplification of $Y[k]$ causes amplification of the noise $N[k]$, and further causes an inaccurate to-be-solved channel frequency domain response, causing sensing performance deterioration.

It may be understood that a sensing performance deterioration degree can be reduced by reducing the fluctuation of the frequency domain waveform of the signal. For example, amplitude increase may be performed on a part of waveform with a low amplitude in a floor clipping (floor clipping) manner. To be specific, modulus value amplification processing is performed on a modulated symbol with a low modulus value, to reduce an amplification coefficient of $Y[k]$, or avoid amplification of $Y[k]$, so as to reduce the sensing performance deterioration degree, or avoid the sensing performance deterioration. The following describes the floor clipping in detail.

V. Floor clipping

In a possible implementation, a transmit end may amplify a modulus value of a modulated symbol whose modulus value is less than a clipping threshold in a modulated symbol sequence. The modulated symbol sequence may be a modulated symbol sequence obtained by modulating data based on a constellation diagram, and each modulated symbol may be mapped to one subcarrier.

Further, after the modulated symbol whose modulus value is less than the clipping threshold is amplified, the modulus value may be equal to the clipping threshold, and a phase remains unchanged, that is, an included angle $\phi$ remains unchanged.

For example, the foregoing modulus value amplification processing may be expressed by using Formula (3):

$$\begin{cases} X(n) = Th \cdot e^{j2\pi*angle(X(n))} & if\,|X(n)| < Th \\ X(n) = X(n) & if\,|X(n)| \geq Th \end{cases} \qquad \text{Formula (3)}$$

In Formula (3), $X(n)$ may represent a modulated symbol in the modulated symbol sequence, $n$ is a number of the modulated symbol in the modulated symbol sequence, $n$ may correspond to a subcarrier index, $angle(X(n))$ represents an included angle corresponding to the modulated symbol, and $Th$ may represent the clipping threshold. The clipping threshold may be specifically a proportion value of the normalization factor described in the foregoing "constellation diagram". For example, the clipping threshold may be 0.5, that is, represents 0.5 times 1/E. It may be understood that the clipping threshold may be a proportion value of a normalized modulus value or a normalized Euclidean distance value corresponding to the modulated symbol.

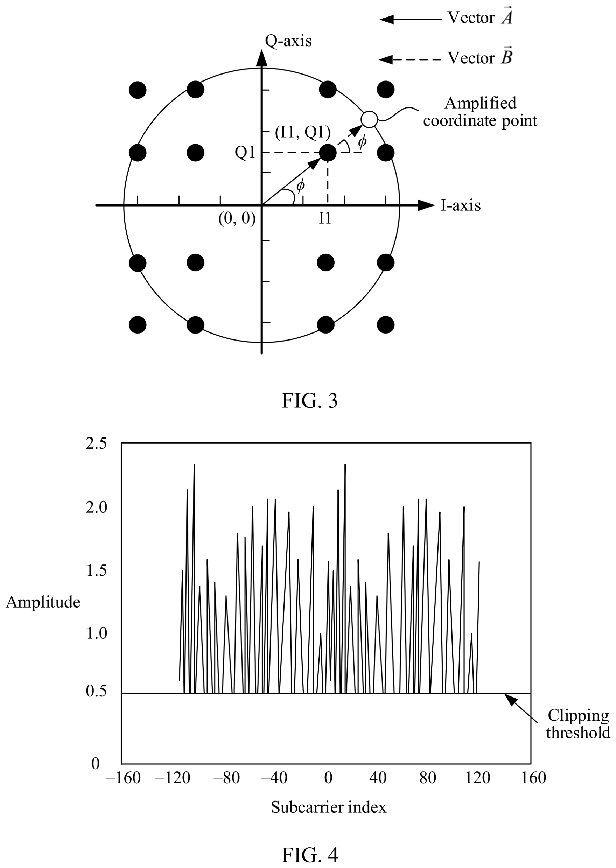

An example in which a $T_h \cdot e^{j2\pi*angle(X(n))}$ operation is performed on the modulated symbol corresponding to the constellation point (I1, Q1) in FIG. 1 is used for description with reference to FIG. 3. As shown in FIG. 3, the modulated symbol corresponding to the constellation point (I1, Q1) is $X(n)$, and the included angle $\phi$ is $angle(X(n))$. It is assumed that the modulus value $|X(n)|$ of the modulated symbol $X(n)$ is less than the clipping threshold $Th$. After the $T_h \cdot e^{j2\pi*angle(X(n))}$ operation is performed on the modulated symbol $X(n)$, an amplified coordinate point corresponding to the modulated symbol $X(n)$ is on a circle with an origin as a center and a radius of $Th$, and an included angle corresponding to the amplified coordinate point remains unchanged. A vector that the origin (0, 0) points to the amplified coordinate point may represent a modulated symbol $Th \cdot e^{j2\pi*angle(X(n))}$ obtained by amplifying the modulus value of the modulated symbol $X(n)$. The modulated symbol $T_h \cdot e^{j2\pi*angle(X(n))}$ obtained by amplifying the modulus value may be a vector sum between a vector $\vec{A}$ and a vector $\vec{B}$. In other words, the vector $\vec{B}$ in FIG. 3 may represent a symbol introduced in the modulus value amplification processing. Because the introduced symbol actually does not transmit data, the introduced symbol may be considered as an interference symbol.

It may be understood that, the modulus value amplification processing corresponding to Formula (3) is merely an example, and another modulus value amplification manner may be used. For example, a phase does not need to remain unchanged. Further, the foregoing modulus value amplification processing may be performed before subcarrier mapping, and a modulated symbol sequence obtained through modulus value amplification processing may be used to generate a signal through subcarrier mapping, OFDM processing, and the like.

Further, in comparison with an original frequency domain waveform on which modulus value amplification processing is not performed, in a frequency domain waveform of a signal generated based on the modulated symbol obtained through modulus value amplification processing, a part of waveform whose amplitude is less than the clipping threshold in the original frequency domain waveform is eliminated. For example, the frequency domain waveform in FIG. 2 is the original frequency domain waveform. When the clipping threshold is 0.5, FIG. 4 is a diagram of the waveform obtained by performing modulus value amplification processing on the original frequency domain waveform in FIG. 2. A part of waveform whose amplitude is less than 0.5 in the original frequency domain waveform is eliminated. As shown in Formula (3) and FIG. 3, the interference symbol (namely, the symbol introduced in FIG. 3) is introduced in the foregoing modulus value amplification processing based on the original modulated symbol $X(n)$, and the modulated symbol sequence obtained through modulus value amplification processing may be decomposed into two parts: the original modulated symbol sequence and an interference symbol sequence. It may be understood that the original modulated symbol sequence is a modulated symbol sequence on which modulus value amplification processing is not performed.

Further, the signal generated based on the foregoing modulated symbol sequence obtained through modulus value amplification processing may include: a data signal used to carry the original modulated symbol sequence, and an interference signal used to carry the interference symbol. When receiving the signal, a receive end considers the interference signal as noise and suppresses the interference signal, to obtain the data signal in the signal, and then performs demodulation based on the data signal.

It should be understood that, because the data signal and the interference signal are sent at the same time, the interference signal occupies a transmit power originally allocated for sending data, that is, the allocated transmit power is for the data signal. Therefore, when the interference signal occupies the allocated transmit power, an actual transmit power of the sent data signal is less than the allocated transmit power. Further, when the actual transmit power of the sent data signal is less than the allocated transmit power, the modulus value corresponding to the original modulated symbol is proportionally reduced, and the Euclidean distance value corresponding to the original modulated symbol in the constellation diagram is also proportionally reduced. Consequently, an offset exists between a coordinate point corresponding to the original modulated symbol in the constellation diagram and an actual constellation point corresponding to the original modulated symbol in the constellation diagram. For example, the transmit power allocated by the transmit end to the data signal is 10 power units, and the transmit power of the interference signal is three power units. Therefore, the transmit power of the data signal is seven units. In this case, the transmit power of the data signal is reduced from 10 units to seven units, that is, the transmit power of the data signal is reduced to 7/10 of the original 10 power units. In other words, a modulus value of each original modulated symbol in the original modulated symbol sequence carried by the data signal is proportionally reduced to 7/10 of an original modulus value. Therefore, the offset exists between the coordinate point corresponding to the original modulated symbol in the constellation diagram and the actual constellation point corresponding to the original modulated symbol in the constellation diagram.

It may be understood that the transmit power allocated for sending data may be a transmit power of a physical channel (for example, a PUSCH or a PDSCH) carrying the data signal. This is uniformly described herein, and details are not described below again.

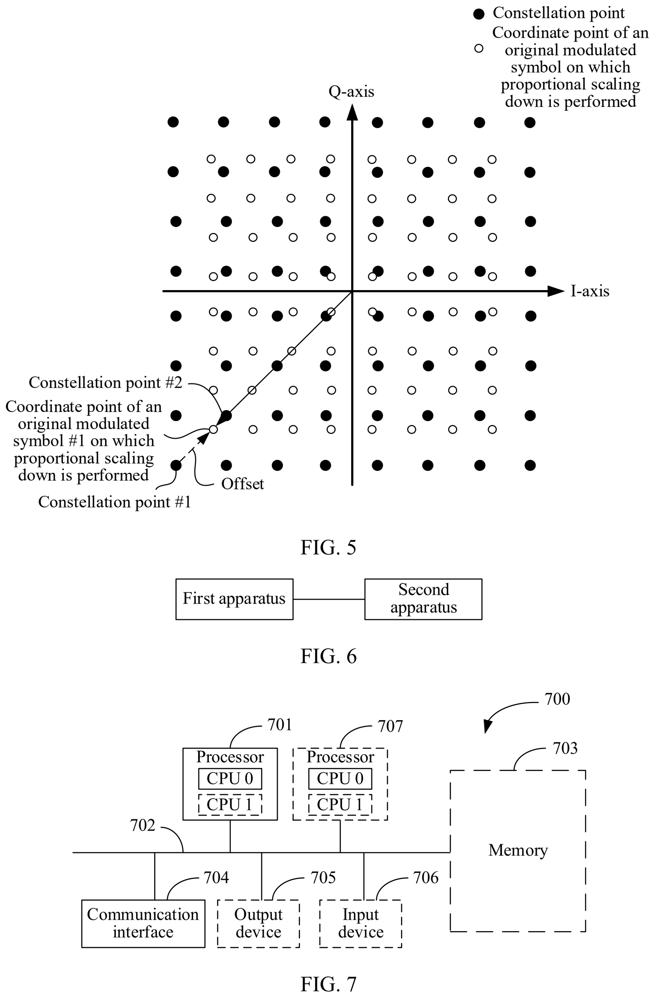

With reference to FIG. 5, the following further describes the offset existing between the coordinate point corresponding to the original modulated symbol in the constellation diagram and the actual constellation point corresponding to the original modulated symbol.

FIG. 5 is a constellation diagram corresponding to 64QAM. As shown in FIG. 5, black dots represent constellation points in the 64QAM constellation diagram, and unfilled dots represent coordinate points corresponding to original modulated symbols that are proportionally scaled down in the constellation diagram. It can be learned from FIG. 5 that coordinate points that correspond to the original modulated symbols and that need to be in one-to-one correspondence with the constellation points in the constellation diagram are shifted toward an origin due to proportional reduction of modulus values of the original modulated symbols.

It may be understood that, when the data signal is sent, if an offset exists between the coordinate point corresponding to the modulated symbol in the constellation diagram and an actual constellation point corresponding to the modulated symbol, the offset also exists in a symbol obtained by the receive end when the receive end receives the data signal. This increases a probability of incorrect determining during demodulation by the receive end. Further, a larger clipping threshold in the foregoing modulus value amplification processing indicates a larger modulus value corresponding to the interference symbol, and a larger reduction proportion of the modulus value of the original symbol. Therefore, when the receive end demodulates the data signal, a probability of incorrect determining increases.

For example, in FIG. 5, a constellation point corresponding to an original modulated symbol #1 during modulation is a constellation point #1. When the clipping threshold is large, a coordinate point of the original modulated symbol #1 obtained through proportional scaling down is closer to a constellation point #2 than the constellation point #1. Therefore, a symbol obtained by the receive end when the receive end receives a data signal is closer to the constellation point #2, and a constellation point corresponding to the symbol is incorrectly determined as the constellation point #2.

In other words, a larger clipping threshold in the foregoing modulus value amplification processing indicates a larger bit error rate of data signal transmission.

In view of this, embodiments of this application provide a signal transmission method, to reduce a bit error rate in a data signal transmission process.

The following describes technical solutions in embodiments of this application with reference to the accompanying drawings in embodiments of this application.

For ease of understanding of embodiments of this application, the following descriptions are provided before embodiments of this application are described.

1. In embodiments of this application, for ease of description, numbers or indexes may be consecutively numbered from 1, or may be consecutively numbered from 0, or may be numbered from any parameter.

2. "Predefinition", "preconfiguration", or "protocol agreement" may be implemented by pre-storing corresponding code or table in a device (for example, a first apparatus and/or a second apparatus) or in another manner that may indicate related information. A specific implementation thereof is not limited in embodiments of this application. "Storing" may mean storing in one or more memories.

3. A "protocol" in embodiments of this application may be a standard protocol in the communication field, for example, may include an LTE protocol, an NR protocol, and a related protocol applied to a future communication system. This is not limited in embodiments of this application.

4. In embodiments of this application, descriptions such as "when ...", "in a case that ...", and "if" all mean that a device (for example, the first apparatus or the second apparatus) performs corresponding processing in an objective case, are not intended to limit time, do not require the device to perform a determining action during implementation, and do not mean any other limitation.

5. In embodiments of this application, "sending information to ... (the first apparatus)" may be understood as that a destination end of the information is the first apparatus, and may include directly or indirectly sending the information to the first apparatus. "Receiving information from ... (the second apparatus)" or "receiving information that is from ... (the second apparatus)" may be understood as that a source end of the information is the second apparatus, and may include directly or indirectly receiving the information from the second apparatus. Necessary processing like a format change may be performed on the information between the source end and the destination end for information sending. However, the destination end can understand valid information from the source end. A similar expression in this application may be understood similarly, and details are not described herein again.

6. In the descriptions of embodiments of this application, unless otherwise specified, "and/or" in embodiments of this application indicates that three relationships may exist. For example, A and/or B may indicate the following three cases: Only A exists, both A and B exist, and only B exists, where A and B may be singular or plural. In addition, "at least one of the following items (pieces)" or a similar expression thereof refers to any combination of these items, including any combination of singular items (pieces) or plural items (pieces). In addition, to clearly describe the technical solutions in embodiments of this application, words such as "first" and "second" are used in embodiments of this application to distinguish between same items or similar items that provide basically same functions or purposes. A person skilled in the art may understand that the words such as "first" and "second" do not limit a quantity and an execution sequence, and the words such as "first" and "second" are not limited to be necessarily different. In addition, in embodiments of this application, words such as "example" or "for example" is used to give an example, an illustration, or a description.

Embodiments of this application may be applied to an LTE system or an NR system (which may also be referred to as a 5th generation (5th generation, 5G) system), an LTE-NR hybrid networking system, a vehicle to everything (vehicle to everything, V2X) system, a device-to-device (device-to-device, D2D) system, a machine to machine (machine to machine, M2M) communication system, an internet of things (internet of things, IoT) system (for example, a narrowband internet of things (narrowband internet of things, NB-IoT) system), a 6G system, and another next-generation communication system. Alternatively, the communication system may be an open radio access network (open radio access network, O-RAN or ORAN), a cloud radio access network (cloud RAN, CRAN), or a wireless fidelity (wireless fidelity, Wi-Fi) system. This is not limited.

In addition, a communication architecture and a service scenario described in embodiments of this application are intended to describe the technical solutions in embodiments of this application more clearly, and do not constitute a limitation on the technical solutions provided in embodiments of this application. A person of ordinary skill in the art may learn that, with the evolution of the communication architecture and the emergence of new service scenarios, the technical solutions provided in embodiments of this application are also applicable to similar technical problems.

FIG. 6 is a diagram of a structure of a communication system according to an embodiment of this application. The communication system includes a first apparatus and a second apparatus. The first apparatus may be a terminal device or a chip of the terminal device, and the second apparatus may be a network device or a chip of the network device; or the first apparatus may be a network device or a chip of the network device, and the second apparatus may be a terminal device or a chip of the terminal device.

In a possible implementation, the first apparatus receives a data signal and a DMRS from the second apparatus; the first apparatus obtains, based on the data signal and the DMRS, a symbol carried in the data signal; and the first apparatus determines a power offset proportion coefficient between the data signal and the DMRS, and determines, based on the power offset proportion coefficient, a constellation point corresponding to the symbol.

In this embodiment of this application, when demodulating the symbol carried in the data signal, the first apparatus determines, based on the power offset proportion coefficient between the data signal and the DMRS, the constellation point corresponding to the symbol, so that an offset between a coordinate point corresponding to the symbol in a constellation diagram and an actual constellation point corresponding to the symbol in the constellation diagram can be reduced based on the power offset proportion coefficient, to reduce a probability that the symbol is incorrectly determined as another constellation point. Therefore, according to the signal transmission method provided in this embodiment of this application, a bit error rate in a data signal transmission process can be reduced.

Specific implementations of the foregoing solutions are described in detail in the following embodiments. Details are not described herein.

In a possible implementation, the network device in embodiments of this application may be a device communicating with the terminal device. The network device may also be referred to as an access network (radio access network, RAN) device, an access node, a RAN entity, a RAN node, or the like.

Further, in a possible scenario, the network device may be a transmission and reception point (transmission and reception point, TRP), a base station, a remote radio unit (remote radio unit, RRU) or a baseband unit (baseband unit, BBU) (which may also be referred to as a digital unit (digital unit, DU)) of a split base station, a broadband network gateway (broadband network gateway, BNG), an aggregation switch, a non-3GPP access device, a relay station, an access point, or the like. The network device may be a macro base station, a micro base station, an indoor base station, a relay node, a donor node, or a radio controller in a CRAN scenario. Optionally, the network device may alternatively be a server, a wearable device, a vehicle, a vehicle-mounted device, or the like. For example, the network device in a V2X system may be a road side unit (road side unit, RSU). In addition, the network device in embodiments of this application may be an eNB or an eNodeB (evolved NodeB) in LTE, a radio controller in a CRAN scenario, a base station (for example, a next generation NodeB (gNodeB, gNB)) in a 5G communication system, a base station in a future evolved system (for example, a 6G communication system), or the like. This is not specifically limited herein.

In a possible implementation, in some deployments, the gNB may include a central unit (central unit, CU), a DU, a CU-control plane (control plane, CP), a CU-user plane (user plane, UP), or a radio unit (radio unit, RU). The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) signaling layer and/or a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be divided into a network device in the RAN, or the CU may be divided into a network device in the CN. This is not limited in embodiments of this application.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, in embodiments of this application, the CU, the CU-CP, the CU-UP, the DU, and the RU are used as an example for description. In embodiments of this application, any unit in the CU (or the CU-CP or the CU-UP), the DU, and the RU may be implemented by using a software module, a hardware module, or a combination of a software module and a hardware module.

In a possible implementation, the terminal device in embodiments of this application may be a device for implementing a wireless communication function, for example, a terminal or a chip that may be used in a terminal. The terminal may be user equipment (user equipment, UE), an access terminal, a terminal unit, a terminal station, a mobile station, a remote station, a remote terminal, a mobile device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a VR terminal device, an AR terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

In a possible implementation, the first apparatus and the second apparatus in embodiments of this application each may also be referred to as a communication apparatus, and may be a general-purpose device or a dedicated device. This is not specifically limited in embodiments of this application.

In a possible implementation, a related function of the first apparatus or the second apparatus in embodiments of this application may be implemented by one device, or may be jointly implemented by a plurality of devices, or may be implemented by one or more functional modules in one device. This is not specifically limited in embodiments of this application. It may be understood that the function may be a network element in a hardware device, or may be a software function running on dedicated hardware, or may be a combination of hardware and software, or may be an instantiated virtualization function on a platform (for example, a cloud platform).

For example, a related function of the first apparatus or the second apparatus in embodiments of this application may be implemented by a communication apparatus 700 in FIG. 7. FIG. 7 is a diagram of a structure of the communication apparatus 700 according to an embodiment of this application. The communication apparatus 700 includes one or more processors 701, a communication line 702, and at least one communication interface (only an example in which the communication interface 704 and one processor 701 are included is used for description in FIG. 7), and may further include a memory 703.

The processor 701 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 702 may include a path, configured to connect different components.

The communication interface 704 may be a transceiver module configured to communicate with another device or a communication network, for example, an Ethernet, a RAN, or a wireless local area network (wireless local area network, WLAN). For example, the transceiver module may be an apparatus like a transceiver or a transceiver machine. In a possible implementation, the communication interface 704 may alternatively be a transceiver circuit located in the processor 701, and is configured to implement a signal input and a signal output of the processor.

The memory 703 may be an apparatus having a storage function, for example, may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital versatile optical disc, and a Blu-ray disc), a magnetic disk storage medium or another magnetic storage device, or any another medium that can be used to carry or store desired program code in a form of instructions or a data structure and that can be accessed by a computer, but not limited thereto. The memory may exist independently, and is connected to the processor through the communication line 702. The memory may alternatively be integrated with the processor.

The memory 703 is configured to store computer-executable instructions for performing the solutions in this application, and the processor 701 controls execution. The processor 701 is configured to execute the computer-executable instructions stored in the memory 703, to implement the signal transmission method provided in embodiments of this application.

Alternatively, in this embodiment of this application, the processor 701 may perform a processing-related function in the signal transmission method provided in the following embodiments of this application, and the communication interface 704 is responsible for communicating with another device or a communication network. This is not specifically limited in embodiments of this application.

In a possible implementation, the memory 703 in this embodiment of this application may be further configured to store information or parameters described in the following embodiments, for example, a power offset proportion coefficient, a candidate offset proportion coefficient set, a clipping threshold, indication information, maximum power reduction (maximum power reduction, MPR) configuration information, and EPRE configuration information.

The computer-executable instructions in embodiments of this application may also be referred to as application program code. This is not specifically limited in embodiments of this application.

In a specific implementation, in an embodiment, the processor 701 may include one or more CPUs such as a CPU 0 and a CPU 1 in FIG. 7.

In a specific implementation, in an embodiment, the communication apparatus 700 may include a plurality of processors, for example, the processor 701 and a processor 707 shown in FIG. 7. Each of the processors may be a single-core (single-CPU) processor, or may be a multicore (multi-CPU) processor. The processor herein may be one or more devices, circuits, and/or processing cores configured to process data (for example, computer program instructions).

In a specific implementation, in an embodiment, the communication apparatus 700 may further include an output device 705 and an input device 706. The output device 705 communicates with the processor 701, and may display information in a plurality of manners.

The communication apparatus 700 may be a general-purpose apparatus or a dedicated apparatus. For example, the communication apparatus 700 may be a desktop computer, a portable computer, a network server, a palmtop computer (personal digital assistant, PDA), a mobile phone, a tablet computer, a wireless terminal device, an embedded device, or a device having a structure similar to that in FIG. 7. A type of the communication apparatus 700 is not limited in embodiments of this application.

The following describes in detail the signal transmission method provided in embodiments of this application with reference to FIG. 1 to FIG. 8.

It should be understood that, in the following embodiments of this application, a name of a signal between devices or a name or the like of each parameter in the signal is merely an example, and may be another name in a specific implementation. This is not specifically limited in embodiments of this application.

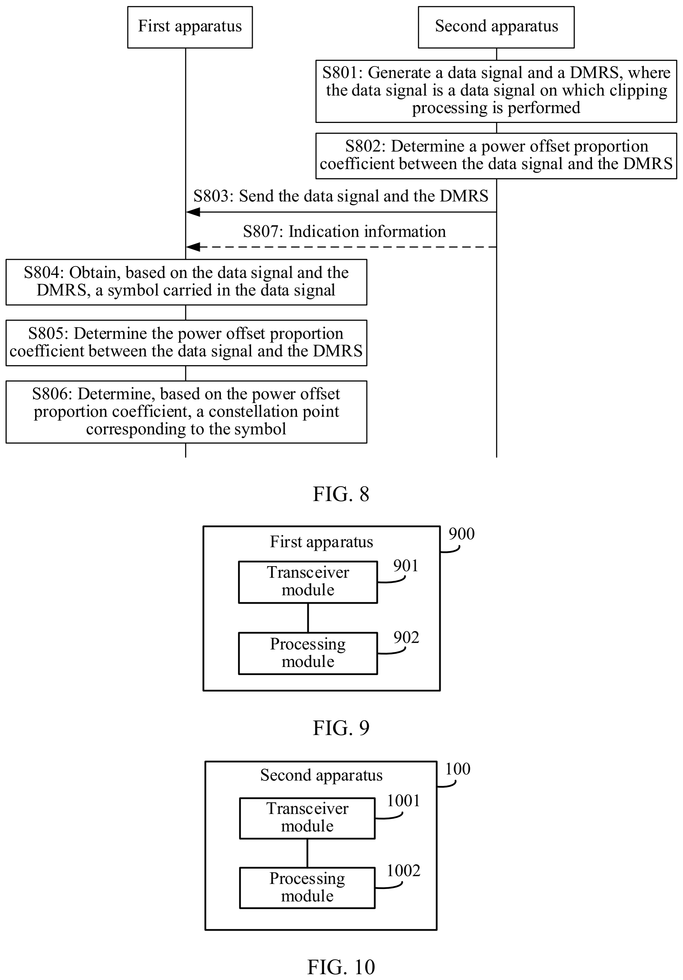

Interaction between the first apparatus and the second apparatus shown in FIG. 6 is used as an example. FIG. 8 shows a signal transmission method according to an embodiment of this application. The method includes the following steps.

S801: The second apparatus generates a data signal and a DMRS. The data signal is a data signal on which clipping processing is performed.

S802: The second apparatus determines a power offset proportion coefficient between the data signal and the DMRS.

S803: The second apparatus sends the data signal and the DMRS to the first apparatus based on the power offset proportion coefficient. Correspondingly, the first apparatus receives the data signal and the DMRS from the second apparatus.

S804: The first apparatus obtains, based on the data signal and the DMRS, a symbol carried in the data signal.

S805: The first apparatus determines the power offset proportion coefficient between the data signal and the DMRS.

S806: The first apparatus determines, based on the power offset proportion coefficient, a constellation point corresponding to the symbol.

The following separately describes steps S801 to S804 in detail.

For step S801:

It should be understood that, based on the foregoing related descriptions of the communication system shown in FIG. 6, the second apparatus may be a terminal device or a network device. The data signal and the DMRS that are generated by the second apparatus may be multi-carrier superposed signals, for example, signals on which DFT-s-OFDM processing is performed. It may be understood that, in this embodiment of this application, a downlink signal may also be a signal on which DFT-s-OFDM processing is performed.

Further, the second apparatus may perform clipping processing on the data signal based on a sensing requirement or based on an indication of another apparatus (for example, the first apparatus) or a CN network element. In other words, in step S801, the data signal is a data signal on which clipping processing is performed. To be specific, an actual transmit power of the data signal is less than a transmit power of a physical data channel carrying the data signal, and a modulus value corresponding to a modulated symbol carried in the data signal is proportionally reduced. The clipping processing may be the foregoing "floor clipping" processing, for example, the modulus value amplification processing shown in Formula (3). Certainly, the clipping processing in this embodiment of this application may alternatively be ceil clipping, or the clipping processing may include floor clipping and ceil clipping. The ceil clipping may be performing clipping on a part of waveform with a high amplitude, that is, performing a modulus value reduction operation on a modulated symbol with a high modulus value. It may be understood that, after ceil clipping processing is performed, the modulus value corresponding to the modulated symbol carried in the data signal is proportionally amplified. Consequently, as described in the foregoing "floor clipping", an offset exists between a coordinate point corresponding to the modulated symbol in a constellation diagram and an actual constellation point corresponding to the modulated symbol. Therefore, a probability of incorrect determining when a receive end demodulates the signal is increased.

Further, a clipping threshold in the foregoing clipping processing may be a clipping threshold determined by the second apparatus based on a measurement result or a sensing performance requirement, or the clipping threshold is indicated. This is not specifically limited in embodiments of this application.

It may be understood that when the second apparatus is a terminal device and the first apparatus is a network device, the data signal may be an uplink signal, and the uplink signal may be carried on a physical uplink channel, for example, a PUSCH. When the second apparatus is a network device and the first apparatus is a terminal device, the data signal may be a downlink signal, and the downlink signal may be carried on a physical downlink channel, for example, a PDSCH.

It may be further understood that, for the second apparatus, the modulated symbol carried in the data signal is a modulated symbol on which clipping processing is performed. The modulated symbol may include an original modulated symbol and an interference symbol. The original modulated symbol is a modulated symbol on which clipping processing is not performed, and the interference symbol is a symbol introduced by performing clipping processing on the modulated symbol. For details, refer to the related descriptions in the foregoing "floor clipping". Details are not described herein again.

Further, because the data signal is a data signal on which clipping processing is performed, the transmit power of the data signal is different from an allocated or configured transmit power, that is, the transmit power of the data signal is different from the transmit power of the physical data channel (for example, the PDSCH or the PUSCH) carrying the data signal. For example, when the clipping processing is the foregoing "floor clipping", the transmit power of the data signal is less than the transmit power of the PDSCH or the PUSCH.

For step S802:

It should be understood that, because the data signal is a data signal on which clipping processing is performed, the transmit power of the data signal is different from the transmit power of the PDSCH or the PUSCH. Therefore, a transmit power ratio of the data signal to the DMRS is not the EPRE ratio of the PDSCH to the DMRS in Table 1 in the foregoing "transmit power of the data signal" or the EPRE ratio of the PUSCH to the DMRS specified in TS 38.214.

In other words, in this embodiment of this application, the power offset proportion coefficient between the data signal and the DMRS is not the EPRE ratio of the PDSCH to the DMRS, or the EPRE ratio of the PUSCH to the DMRS.

The following specifically describes the power offset proportion coefficient in this embodiment of this application.

It should be understood that, in this embodiment of this application, the power offset proportion coefficient may indicate a transmit power ratio of the data signal to the physical data channel carrying the data signal. For example, based on the related example in the foregoing "floor clipping", the transmit power of the physical channel carrying the data signal is 10 power units. After floor clipping processing is performed on the data signal, the transmit power ratio of the data signal to the physical data channel carrying the data signal is 7/10. In other words, the power offset proportion coefficient may be 7/10.

In a possible implementation, the power offset proportion coefficient may be less than or equal to 1, or may be greater than 1. For example, when the clipping processing is the foregoing "floor clipping", the actual transmit power of the data signal is reduced. Therefore, a value range of the power offset proportion coefficient is (0, 1). For another example, in a case of the ceil clipping, the actual transmit power of the data signal may be increased. Therefore, a value of the power offset proportion coefficient may be greater than 1.

Further, the value corresponding to the power offset proportion coefficient may be a quantized value, for example, 0.33.

In a possible implementation, the power offset proportion coefficient may be the transmit power ratio of the data signal to the DMRS.

It may be understood that, based on the related descriptions of Table 1, when a quantity of DMRS CDM groups without data is 1, the transmit power of the physical data channel is the same as a transmit power of the DMRS, so that the transmit power of the physical data channel carrying the data signal may be represented by the DMRS. In other words, the power offset proportion coefficient may be the transmit power ratio of the data signal to the DMRS.

Further, in another possible implementation, the power offset proportion coefficient may be an EPRE ratio of the data signal to the DMRS.

It may be understood that, based on the related descriptions of Table 1, the transmit power of the physical data channel and the transmit power of the DMRS are equal to the EPRE ratio of the transmit power of the physical data channel to the DMRS. Therefore, when the quantity of DMRS CDM groups without data is 1, the power offset proportion coefficient may be the EPRE ratio of the data signal to the DMRS.

It should be understood that, when the quantity of DMRS CDM groups without data is greater than 1, the transmit power of the physical data channel is different from the transmit power of the DMRS, but a ratio of the transmit power of the physical data channel to the transmit power of the DMRS is the EPRE ratio specified in TS 38.214. In other words, the transmit power ratio of the data signal to the physical data channel carrying the data signal may be represented based on the EPRE ratio.

Further, the EPRE ratio may be a linear value, that is, 0.5, 0.33, or the like. Based on Table 1, the EPRE ratio may alternatively be a logarithmic value, that is, 0 dB, -3 dB, or the like.

The following describes a relationship between the power offset proportion coefficient and the EPRE ratio when the quantity of DMRS CDM groups without data is greater than 1.

In a possible implementation, the power offset proportion coefficient is a logarithmic value, and the power offset proportion coefficient may be a difference between the transmit power ratio and a preconfigured transmit power ratio.

In another possible implementation, the power offset proportion coefficient is a linear value, and the power offset proportion coefficient is a ratio of the transmit power ratio to the preconfigured transmit power ratio.

The transmit power ratio is the transmit power ratio of the data signal to the DMRS, and the preconfigured transmit power ratio is the transmit power ratio of the physical data channel carrying the data signal to the DMRS.

It may be understood that, because the transmit power ratio of the physical data channel to the DMRS is the EPRE ratio of the physical data channel to the DMRS, the preconfigured transmit power ratio may alternatively be expressed as that the preconfigured transmit power is the EPRE ratio of the physical data channel carrying the data signal to the DMRS.

For example, the transmit power ratio of the data signal to the DMRS is: the transmit power of the data signal/the transmit power of the DMRS=1/4 (that is, 0.25). In Table 1, when the quantity of DMRS CDM groups without data is equal to 2, the preconfigured transmit power ratio is -3 dB (that is, 0.5), that is, the transmit power of the PDSCH carrying the data signal/the transmit power of the DMRS=1/2 (that is, 0.5). Therefore, the power offset proportion coefficient is a ratio between the two, that is, 0.25/0.5=0.5.

It may be understood that, if a logarithmic value is used for representation, the power offset proportion coefficient is a difference between the two, that is, -6 dB-(-3 dB)=-3 dB.

For another example, in Table 1, when the quantity of DMRS CDM groups without data is equal to 3, the preconfigured transmit power ratio is -4.77 dB, that is, the transmit power of the PDSCH carrying the data signal/the transmit power of the DMRS=1/3 (that is, 0.33). The power offset proportion coefficient may be a ratio between the two, that is, 0.25/0.33=0.75, or the power offset proportion coefficient may be a difference between the two, that is, -6 dB-(-4.77 dB)=-1.23 dB.

It should be understood that the power offset being the difference between the transmit power ratio and the preconfigured transmit power ratio or the ratio of the transmit power ratio to the preconfigured transmit power ratio is also applicable to a case in which the quantity of DMRS CDM groups without data is equal to 1.

In other words, the transmit power ratio of the data signal to the DMRS may include two parts: the power offset proportion coefficient and the preconfigured transmit power ratio.

It may be understood that, because the transmit power ratio of the data signal to the DMRS is equal to the EPRE ratio of the data signal to the DMRS, the power offset proportion may be a part of the EPRE ratio of the data signal to the DMRS.

In a possible implementation, the power offset proportion coefficient is a logarithmic value, and the power offset proportion coefficient may be a difference between a first EPRE ratio and a second EPRE ratio.

In another possible implementation, the power offset proportion coefficient is a linear value, and the power offset proportion coefficient may be a ratio of a first EPRE ratio to a second EPRE ratio.

The first EPRE ratio is the EPRE ratio of the data signal to the DMRS, and the second EPRE ratio is the EPRE ratio of the physical data channel carrying the data signal to the DMRS.

It may be understood that the second EPRE ratio may be an EPRE ratio of a PDSCH to a DMRS or an EPRE ratio of a PUSCH to a DMRS defined in an existing protocol.

Further, in a possible implementation, the first EPRE ratio may be preconfigured or configured.

In other words, the power offset proportion coefficient may be added on the basis of the second EPRE ratio, namely, the existing EPRE ratio of the PDSCH or the PUSCH to the DMRS, to define the EPRE ratio of the data signal to the DMRS.

For example, as shown in Table 2, the EPRE ratio of the data signal to the DMRS=the EPRE ratio of the PDSCH to the DMRS+the power offset proportion coefficient $\Delta Th.$ The power offset proportion coefficient $\Delta Th$ may be a logarithmic value.

Table 2

| Quantity of DMRS CDM groups without data | DMRS configuration type 1 | DMRS configuration type 2 |
|---|---|---|
| 1 | 0+$\Delta Th$ dB | 0+$\Delta Th$ dB |
| 2 | -3+$\Delta Th$ dB | -3+$\Delta Th$ dB |
| 3 | - | -4.77+$\Delta Th$ dB |

Further, in a possible implementation, for each DMRS configuration type, different quantities of DMRS CDM groups without data may correspond a same power offset proportion coefficient $\Delta Th.$ For example, as shown in Table 3, different quantities of DMRS CDM groups without data may correspond to the same power offset proportion coefficient (-3 dB), and different DMRS configuration types may correspond to the same power offset proportion coefficient (-3 dB).

Table 3

| Quantity of DMRS CDM groups without data | DMRS configuration type 1 | DMRS configuration type 2 |
|---|---|---|
| 1 | 0+(-3 dB) | 0+(-3 dB) |
| 2 | -3+(-3 dB) | -3+(-3 dB) |
| 3 | - | -4.77+(-3 dB) |

For another example, with reference to Table 3, as shown in Table 4, different DMRS configuration types may correspond to different power offset proportion coefficients.

Table 4

| Quantity of DMRS CDM groups without data | DMRS configuration type 1 | DMRS configuration type 2 |
|---|---|---|
| 1 | 0+(-3 dB) | 0+(-4.77 dB) |
| 2 | -3+(-3 dB) | -3+(-4.77 dB) |
| 3 | - | -4.77+(-4.77 dB) |

In another possible implementation, for each DMRS configuration type, different quantities of DMRS CDM groups without data may correspond different power offset proportion coefficients $\Delta Th$. For example, as shown in Table 5, different quantities of DMRS CDM groups without data may correspond to different power offset proportion coefficients, and different DMRS configuration types correspond to a same power offset proportion coefficient. It may be understood that different DMRS configuration types may alternatively correspond to different power offset proportion coefficients. This is not specifically limited in embodiments of this application.

Table 5

| Quantity of DMRS CDM groups without data | DMRS configuration type 1 | DMRS configuration type 2 |
| --- | --- | --- |
| 1 | 0+(-3 dB) | 0+(-3 dB) |
| 2 | -3+(-4.77 dB) | -3+(-4.77 dB) |
| 3 | - | -4.77+(-6 dB) |

It may be understood that, in Table 2 to Table 5, because the EPRE ratio of the PDSCH to the DMRS is 1 (that is, 0 dB), the power offset proportion coefficient is the transmit power ratio or the EPRE ratio of the data signal to the DMRS. In other words, the second apparatus may determine the transmit power ratio of the data signal to the DMRS and the power offset proportion coefficient between the data signal and the DMRS based on any one of Table 2 to Table 5, to send the data signal and the DMRS. Further, the first apparatus may also determine the transmit power ratio of the received data signal to the received DMRS and the power offset proportion coefficient based on any one of Table 2 to Table 5.

It should be understood that, as described in the foregoing related descriptions of the foregoing "floor clipping", a specific value of the power offset proportion coefficient may be related to a clipping threshold, and different clipping thresholds may correspond to different power offset proportion coefficients. Further, different clipping thresholds may be configured for different DMRS configuration types, so that different DMRS configuration types may correspond to different power offset proportion coefficients, for example, EPRE ratios of data signals to DMRSs shown in Table 3 and Table 4. Similarly, different quantities of DMRS CDM groups without data may also correspond to different power offset proportion coefficients, for example, EPRE ratios of data signals to DMRSs shown in Table 5.

It may be understood that, in addition to the clipping threshold, the power offset proportion coefficient may be related to another transmission parameter corresponding to the data signal, for example, a modulation order used to transmit the data signal. The following specifically describes an association relationship between the power offset proportion coefficient and the transmission parameter used to transmit the data signal.

In a possible implementation, the power offset proportion coefficient may be associated with the transmission parameter used to transmit the data signal. The transmission parameter includes one or more of the following: a modulation and coding scheme (modulation and coding scheme, MCS) used to transmit the data signal, a constellation diagram used to transmit the data signal, the modulation order used to transmit the data signal, or a clipping threshold used to perform clipping processing on the data signal.

In a possible implementation, the power offset proportion coefficient is in an inverse proportion to the clipping threshold.

It may be understood that, as described in the foregoing related descriptions of the foregoing "floor clipping", during the floor clipping processing, a larger clipping threshold indicates a larger modulus value corresponding to the introduced interference symbol, and therefore, an interference signal corresponding to the interference symbol occupies a larger proportion of the transmit power of the physical data channel carrying the data signal. In this case, the actual transmit power of the data signal is smaller, that is, the transmit power ratio of the data signal to the physical data channel carrying the data signal is smaller, and the power offset proportion coefficient is smaller.

It may be further understood that, a smaller clipping threshold indicates a smaller modulus value corresponding to the introduced interference symbol, and therefore, the actual transmit power of the data signal is close to the transmit power of the physical data channel carrying the data signal, that is, the power offset proportion coefficient is larger.

Further, a larger clipping threshold indicates a smaller fluctuation of a frequency domain waveform on which clipping processing is performed, and smaller impact on sensing performance.

In a possible implementation, the power offset proportion coefficient is determined based on the clipping threshold.

It may be understood that, as described in the foregoing related descriptions of the foregoing "floor clipping", during the floor clipping processing, with reference to the constellation diagram shown in FIG. 3, the modulus value corresponding to the introduced interference symbol may be determined based on the clipping threshold, and the proportion occupied by the interference signal corresponding to the interference symbol in the transmit power of the physical data channel carrying the data signal is determined. Therefore, a reduction proportion of the transmit power of the data signal, namely, the transmit power ratio of the data signal to the physical data channel carrying the data signal or the power offset proportion coefficient, may be determined based on the proportion occupied by the interference signal.

In a possible implementation, when the modulation order is less than or equal to a first threshold, the power offset proportion coefficient is 1. It may be understood that the power offset proportion coefficient is 1, indicating that the transmit power of the data signal is the same as that of the physical data channel carrying the data signal, that is, no interference symbol is introduced in the clipping processing process. It may be further understood that, if modulus values corresponding to modulated symbols are all greater than the clipping threshold, it means that the modulus values of the modulated symbols are not amplified, and therefore, no interference symbol is introduced in the clipping processing process.

Further, when the modulation order is small, frequency domain waveform amplitudes corresponding to different subcarriers in frequency domain are similar, that is, the fluctuation of the frequency domain waveform is small. Therefore, all subcarriers occupied by the data signal meet a condition in Formula (3) in the foregoing "floor clipping", that is, a modulus value $|X(n)|$ of the modulated symbol is greater than or equal to the clipping threshold Th, so that the modulated symbol is not amplified.

For example, when the modulation order is 1, there are only two constellation points in the constellation diagram, and Euclidean distance values corresponding to the two constellation points are the same, that is, different modulated symbols correspond to a same modulus value, that is, no fluctuation occurs in the frequency domain waveform. For another example, when the modulation order is 3, there are only eight constellation points in the constellation diagram, a difference between Euclidean distance values corresponding to the constellation points is small, and therefore, the fluctuation in the frequency domain waveform is small.

Further, the first threshold may be 1, 2, 3, 4, or the like. This is not specifically limited in embodiments of this application.

It may be understood that the second apparatus may determine the first threshold based on a sensing requirement or an indication.

It should be understood that, when the modulation order is less than or equal to the first threshold, the second apparatus may set the clipping threshold to be less than or equal to a normalized proportion value corresponding to a modulated symbol with a smallest modulus value. The normalized proportion value may be a proportion value of a normalization factor, a normalized modulus value, or a normalized Euclidean distance value described in the foregoing "floor clipping".

For example, when the modulation order is 3, for 8QAM, the modulated symbol with the smallest modulus value is a modulated symbol on an I-axis or a Q-axis. Therefore, the clipping threshold may be set to a normalized proportion value corresponding to the modulated symbol on the I-axis or the Q-axis. It may be understood that the clipping threshold may alternatively be set to a smaller normalized proportion value, for example, 0.1, 0.05, or 0.01. This is not specifically limited in embodiments of this application.

It may be understood that, as described above, the clipping threshold is in an inverse proportion to the power offset proportion coefficient. Therefore, a larger clipping threshold indicates a larger transmit power occupied by the introduced interference signal, a larger reduction proportion of the actual transmit power of the data signal, and a larger offset between the coordinate point corresponding to the modulated symbol in the constellation diagram and the actual constellation point corresponding to the modulated symbol. However, at different modulation orders, tolerance degrees for the offset are different. For example, a larger modulation order indicates a lower tolerance degree for the offset, and a smaller modulation order indicates a higher tolerance degree for the offset. This is because for a data signal with a large modulation order, a high signal to interference plus noise ratio (signal to interference plus noise ratio, SINR) is required for normal demodulation. If the clipping threshold is excessively large, that is, an interference signal power is high, a large demodulation loss is caused. However, for a data signal with a small modulation order, demodulation can be performed normally even when a SINR is low.

In other words, a smaller modulation order indicates a higher tolerance degree for interference introduced in the clipping processing. Therefore, the clipping threshold can be appropriately increased, to reduce impact on the sensing performance.

In a possible implementation, the modulation order is in an inverse proportion to the clipping threshold. In other words, a larger modulation order indicates a smaller clipping threshold, and a smaller modulation order indicates a larger clipping threshold. For example, when the modulation order is 6, that is, 64QAM, the clipping threshold may be 0.2, and a modulus value of a modulated symbol whose corresponding modulus value is less than 0.2 needs to be amplified. When the modulation order is 4, that is, 16QAM, the clipping threshold may be 0.7, and a modulus value of a modulated symbol whose corresponding modulus value is less than 0.7 needs to be amplified.

Further, in a possible implementation, the power offset proportion coefficient is in a direct proportion to the modulation order. In other words, a larger modulation order indicates a larger power offset proportion coefficient, and a smaller modulation order indicates a smaller power offset proportion coefficient.

In a possible implementation, a target code rate (target code rate) is in an inverse proportion to the clipping threshold. In other words, a higher target code rate indicates a smaller clipping threshold, and a lower target code rate indicates a larger clipping threshold. It may be understood that the target code rate is similar to the modulation order. A lower target code rate indicates a higher tolerance degree for the interference introduced in the clipping processing, and a higher target code rate indicates a lower tolerance degree for the interference introduced in the clipping processing.

Further, in a possible implementation, the power offset proportion coefficient is in a direct proportion to the target code rate. In other words, a higher target code rate indicates a larger power offset proportion coefficient, and a lower target code rate indicates a smaller power offset proportion coefficient.

It may be understood that the MCS includes the modulation order and the target code rate, an MCS index is in a direct proportion to the modulation order, and the MCS index is in a roughly direct proportion to the target code rate. Therefore, there is also a correspondence between the MCS and the clipping threshold.

In a possible implementation, the MCS is in an inverse proportion to the clipping threshold. A larger MCS index indicates a smaller clipping threshold, and a smaller MCS index indicates a larger clipping threshold.

Further, in a possible implementation, the power offset proportion coefficient is in a direct proportion to the MCS. In other words, a larger MCS index indicates a larger power offset proportion coefficient, and a smaller MCS index indicates a smaller power offset proportion coefficient.

The following describes a specific value of the power offset proportion coefficient by using an example with reference to the association relationship between the transmission parameter and the power offset proportion coefficient.

For example, when the power offset proportion coefficient is a linear value, the value of the power offset proportion coefficient may be one or more elements in the following different sets:

set 1: 0, 0.17, 0.2, 0.25, 0.33, 0.5, 0.75, 1;
set 2: 0, 0.1, 0.2, 0.3, 0.4, 0.5, 0.6, 0.7, 0.8, 0.9, 1;
set 3: 0, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1; and
set 4: 0, 0.2, 0.3, 0.4, 0.5, 0.55, 0.6, 0.65, 0.7, 0.75, 0.8, 0.85, 0.9, 0.95, 1.

An element 0 and an element 1 in the sets may be discarded. Further, the element 1 may indicate that the power offset proportion coefficient is 1. In other words, the transmit power ratio of the data signal to the physical channel carrying the data signal is 1. In other words, after clipping processing is performed on the data signal, the transmit power of the data signal is not reduced. For details, refer to the related descriptions of the power offset proportion coefficient being 1. Details are not described herein again.

Further, the element 0 may be a reserved value, and may indicate another case, for example, may indicate that the receive end is not expected to use the power offset proportion coefficient to perform demodulation, or for another example, may indicate that the data signal is not expected to be used for sensing, but is used for system information transmission.

It should be understood that, in the set 1, the element 0.17 to the element 0.75 may indicate that transmit power ratios of data signals to physical channels carrying the data signals are 1/6, 1/5, 1/4, 1/3, 1/2, and 3/4. In other words, when the clipping threshold is 0.25, the second apparatus may select the foregoing six levels as power offset proportion coefficients. Further, when the modulation order is low, a tolerance degree for the clipping threshold is high. Therefore, a large clipping threshold may be selected, that is, a small power offset proportion coefficient is selected, to reduce a fluctuation degree of the frequency domain waveform, so as to reduce impact on sensing performance. For example, when the modulation order is 4, the second apparatus may select one of the levels 1/6, 1/5, 1/4, or 1/3 as the power offset proportion coefficient. Certainly, to balance a coverage requirement, the second apparatus does not expect that an actual transmit power ratio of the data signal is low, and therefore 1/4 or 1/3 may be selected as the power offset proportion coefficient.

It may be understood that, when the modulation order is high, a tolerance degree for the clipping threshold is low, and therefore a large power offset proportion coefficient needs to be selected. For example, 1/2 or 3/4 may be selected. Certainly, to reduce a sensing performance deterioration degree, the second apparatus does not expect a high actual transmit power ratio of the data signal, and therefore 1/2 may be selected as the power offset proportion coefficient.

It may be further understood that the set 2 to the set 4 may provide more levels for selection, to meet the coverage requirement and the sensing requirement. An interval between different levels in the set 2 is 0.1, that is, a difference between two adjacent power offset proportion coefficients is 0.1, that is, the second apparatus may select the power offset proportion coefficient by using 0.1 as a step size. Similarly, a step size of the set 3 is 0.05, that is, the set 3 may provide a larger quantity of more refined levels for selection.

Further, a difference between the set 4 and the sets 1 to 3 lies in that a difference between power offset proportion coefficients in the set 4 is variable, and a larger power offset proportion coefficient indicates a smaller step size. It may be understood that, as described above, the modulation order may be in a direct proportion to the power offset proportion coefficient. Therefore, a higher modulation order, for example, 64QAM, requires a higher power offset proportion coefficient, and a constellation point (for example, a constellation point in an outermost part of FIG. 5) with a larger Euclidean distance in 64QAM is more sensitive to the power offset proportion coefficient. For example, after the constellation points (black-filled dots) in FIG. 5 are proportionally scaled down (into unfilled dots), a constellation point with a larger Euclidean distance value has a larger offset. This more easily causes incorrect determining. Therefore, for a data signal at a higher modulation order, a more refined level needs to be provided for selection in a range with larger power offset proportion coefficients.

In another possible implementation, the power offset proportion coefficient may be a logarithmic value. A unit of the logarithmic value may be dB. For example, a ratio 1 corresponds to 0 dB, a ratio 1/2 corresponds to -3 dB, and a ratio 1/3 corresponds to -4.77 dB.

Further, the logarithmic value may be a negative value or a positive value. This is not specifically limited in embodiments of this application.

For example, the value of the power offset proportion coefficient may be one or more elements in the following plurality of sets:

set 5: 0 dB, -1 dB, -2 dB, -3 dB, -4 dB, -4.77 dB, -5 dB, -6 dB, -7 dB, -8 dB, -8.45 dB, -10 dB, and -30 dB;
set 6: 0 dB, -0.5 dB, -1 dB, -1.5 dB, -2 dB, -2.5 dB, -3 dB, -3.5 dB, -4.5 dB, -4.77 dB, -5 dB, -5.5 dB, -6 dB, -6.5 dB, -7 dB, -7.5 dB, -8 dB, -8.45 dB, -10 dB, and -30 dB;
set 7: 0 dB, 1 dB, 2 dB, 3 dB, 4 dB, 4.77 dB, 5 dB, 6 dB, 7 dB, 8 dB, 8.45 dB, 10 dB, and 30 dB; and
set 8: 0 dB, 0.5 dB, 1 dB, 1.5 dB, 2 dB, 2.5 dB, 3 dB, 3.5 dB, 4.5 dB, 4.77 dB, 5 dB, 5.5 dB, 6 dB, 6.5 dB, 7 dB, 7.5 dB, 8 dB, 8.45 dB, 10 dB, and 30 dB.

It may be understood that, ranges of corresponding power offset proportion coefficients in the set 5 and the set 6 are (0, 1], and power offset proportion coefficients in the set 7 and the set 8 are greater than or equal to 1. Further, the set 6 may provide a larger quantity of more refined power offset proportion coefficients than the set 5, and the set 8 may provide a larger quantity of more refined power offset proportion coefficients than the set 7.

Based on the association relationship between the transmission parameter and the power offset proportion coefficient and the specific value of the power offset proportion coefficient that are described above, the following describes a correspondence between the power offset proportion coefficient and the transmission parameter, so that the second apparatus determines the power offset proportion coefficient.

In a possible implementation, the transmission parameter may further include a time domain resource and/or a frequency domain resource used to transmit the data signal. The power offset proportion coefficient may be in one-to-one correspondence with the time domain resource and/or the frequency domain resource used to transmit the data signal. The time domain resource and/or the frequency domain resource used to transmit the data signal may be a resource allocated by using a configured grant (configured grant, CG), or may be a dynamic resource scheduled by using DCI. In other words, the second apparatus may determine the power offset proportion coefficient based on the time domain resource and/or the frequency domain resource used to transmit the data signal.

In a possible implementation, the power offset proportion coefficient may be in one-to-one correspondence with the modulation order. In other words, the second apparatus may determine the power offset proportion coefficient based on the modulation order.

In a possible implementation, the power offset proportion coefficient may be in one-to-one correspondence with the MCS. In other words, the second apparatus may determine the power offset proportion coefficient based on the MCS.

In a possible implementation, the power offset proportion coefficient may be in one-to-one correspondence with the clipping threshold. In other words, the second apparatus may determine the power offset proportion coefficient based on the clipping threshold.

In a possible implementation, the power offset proportion coefficient may be in one-to-one correspondence with the constellation diagram. In other words, the second apparatus may determine the power offset proportion coefficient based on the constellation diagram.

It should be understood that the constellation diagram may be different from a conventional constellation diagram corresponding to the modulation order. The 64QAM is used as an example. The conventional constellation diagram may be a constellation diagram corresponding to the 64QAM shown in FIG. 5, and 64 constellation points in the conventional constellation diagram are evenly distributed in a form of eight rows and eight columns. Being different from the conventional constellation diagram corresponding to the 64QAM may mean that 64 constellation points may be unevenly distributed in a form of eight rows and eight columns. Alternatively, being different from the conventional constellation diagram corresponding to the 64QAM may mean that 64 constellation points are not distributed in a form of eight rows and eight columns. For example, the 64 constellation points are distributed in a form of four rows and 16 columns. For another example, the 64 constellation points are distributed in a form of two rows and 32 columns.

It may be understood that, different constellation point distribution may cause different offsets between the modulated symbol and the actual constellation point corresponding to the modulated symbol in the foregoing "floor clipping", so that different constellation diagrams may correspond to different power offset proportion coefficients.

It should be understood that a type of parameter (for example, the modulation order or the clipping threshold) in the transmission parameter may correspond to a plurality of power offset proportion coefficients, that is, one value of the type of parameter may correspond to a plurality of power offset proportion coefficients. Further, the second apparatus may select a power offset proportion coefficient from the plurality of power offset proportion coefficients as the power offset proportion coefficient between the data signal and the DMRS. For example, a value of the modulation order being 4 may correspond three different power offset proportion coefficients, and the second apparatus may select one of the three power offset proportion coefficients as the power offset proportion coefficient between the data signal and the DMRS.

Alternatively, a combination of a plurality of types of parameters in the transmission parameter may correspond to one power offset proportion coefficient, so that the second apparatus may determine the power offset proportion coefficient based on the combination of the plurality of types of parameters.

For example, Table 6 shows a correspondence between the power offset proportion coefficient, the modulation order, and the clipping threshold.

Table 6

| Modulation order | Clipping threshold (proportion value) | Power offset proportion coefficient (logarithmic value) |
|---|---|---|
| 2 | 0.2 | 0 dB |
| | 0.5 | -1 dB |
| 4 | 0.2 | -2 dB |
| | 0.5 | -3 dB |
| 8 | 0.2 | -4.77 dB |
| | 0.5 | |

When the modulation order is 2 and the clipping threshold is 0.5, the second apparatus may determine that the power offset proportion coefficient is -1 dB. Alternatively, when the modulation order is 8 and the clipping threshold is 0.2, the second apparatus may determine that the power offset proportion coefficient is -4.77 dB.

In other words, the first apparatus may determine, from the plurality of power offset proportion coefficients based on the transmission parameter used to transmit the data signal, the power offset proportion coefficient corresponding to the data signal.

In another possible implementation, the power offset proportion coefficient may be preconfigured. The power offset proportion coefficient may be agreed on in a protocol, or the power offset proportion coefficient may be preconfigured by the second apparatus.

To be specific, the second apparatus may determine, based on a preconfigured power offset proportion coefficient, the power offset proportion coefficient corresponding to the data signal.

It should be understood that the power offset proportion coefficient may be negotiated in advance by the first apparatus and the second apparatus, or the power offset proportion coefficient may be indicated by the first apparatus. For example, the first apparatus is a network device, and the second apparatus is a terminal device. The terminal device may receive indication information from the network device, where the indication information indicates the power offset proportion coefficient between the data signal and the DMRS, so that the terminal device may determine the power offset proportion coefficient, and the terminal device may send the data signal and the DMRS to the network device based on the power offset proportion coefficient.

For another example, the first apparatus is a terminal device, and the second apparatus is a network device. The network device may also receive indication information from the terminal device, where the indication information indicates the power offset proportion coefficient between the data signal and the DMRS, so that the network device may determine the power offset proportion coefficient, and the network device may send the data signal and the DMRS to the terminal device based on the power offset proportion coefficient.

It may be understood that, for the preconfigured power offset proportion coefficient, the second apparatus may preconfigure one or more power offset proportion coefficients, and may determine the power offset proportion coefficient corresponding to the data signal from the plurality of power offset proportion coefficients based on the transmission parameter. The plurality of offset proportion coefficients may be a plurality of power offset proportion coefficients in a candidate power offset proportion coefficient set, and the candidate power offset proportion coefficient set may include one or more of the set 1 to the set 8.

For step S803:

It may be understood that, after determining the power offset proportion coefficient between the data signal and the DMRS, the second apparatus may determine the transmit power of the data signal and the transmit power of the DMRS based on the power offset proportion coefficient, and send the data signal and the DMRS.

For step S804:

It should be understood that after receiving the data signal and the DMRS, the first apparatus may process the data signal and the DMRS, to obtain the symbol carried in the signal. The processing may include: signal amplification, cyclic prefix (cyclic prefix, CP) removal, fast Fourier transform, subcarrier demapping (demapping), equalization, and the like. For details, refer to the related descriptions in the protocol. Details are not described herein again.

Further, as described in the foregoing related descriptions of demodulating the non-constant-mode modulated signal by using the DMRS in the "transmit power of the data signal", an amplitude of the data signal may be determined based on the EPRE ratio of the DMRS to the physical data channel carrying the data signal. However, as described in the foregoing related descriptions of step S801, in this embodiment of this application, the transmit power of the data signal is different from the transmit power of the physical data channel carrying the data signal. Therefore, the symbol obtained based on the DMRS and the data signal is a modulated symbol on which spatial transmission is performed, and the modulated symbol is a modulated symbol on which clipping processing is performed.

For example, the modulated symbol corresponding to the symbol in step S804 may be a modulated symbol corresponding to a constellation point (namely, an unfilled dot) on which proportional scaling down is performed in FIG. 5.

For step S805:

It may be understood that, for the power offset proportion coefficient in step S805, refer to the related descriptions in step S802. Details are not described herein again.

The following specifically describes a manner in which the first apparatus determines the power offset proportion coefficient.

In a possible implementation, the power offset proportion coefficient may be preconfigured; or the power offset proportion coefficient may be negotiated in advance by the first apparatus and the second apparatus; or the power offset proportion coefficient may be indicated by the second apparatus. Alternatively, the power offset proportion coefficient may be determined by the first apparatus based on the transmission parameter.

Further, for determining, by the first apparatus, the power offset proportion coefficient based on the transmission parameter, step S805 is similar to step S802.

For example, the power offset proportion coefficient may be associated with the transmission parameter used to transmit the data signal. The transmission parameter includes one or more of the following: the time domain resource used to transmit the data signal, the frequency domain resource used to transmit the data signal, the MCS used to transmit the data signal, the constellation diagram used to transmit the data signal, the modulation order used to transmit the data signal, or the clipping threshold used to perform clipping processing on the data signal.

Further, in a possible implementation, that the first apparatus determines the power offset proportion coefficient between the data signal and the DMRS (step S805) may include the following step.

The first apparatus determines the power offset proportion coefficient from the candidate power offset proportion coefficient set based on the transmission parameter. The candidate power offset proportion coefficient set may be the foregoing preconfigured power offset proportion coefficient set, or the candidate power offset proportion coefficient set is a power offset proportion coefficient set configured by the second apparatus for the first apparatus. This is not specifically limited in embodiments of this application.

Further, the first apparatus may determine the power offset proportion coefficient from the candidate offset proportion coefficient set based on a correspondence between the transmission parameter and the power offset proportion coefficient.

For example, the power offset proportion coefficient may be in one-to-one correspondence with a time domain resource and/or a frequency domain resource used to transmit the data signal, and the first apparatus may determine the power offset proportion coefficient based on the time domain resource and/or the frequency domain resource used to transmit the data signal.

For another example, the power offset proportion coefficient may be in one-to-one correspondence with the modulation order used to transmit the data signal, so that the first apparatus may determine the power offset proportion coefficient based on the modulation order used to transmit the data signal.

For another example, the power offset proportion coefficient may be in one-to-one correspondence with the clipping threshold used to perform clipping processing on the data signal, so that the first apparatus may determine the power offset proportion coefficient based on the clipping threshold.

Similarly, for details about determining, by the first apparatus, the power offset proportion coefficient based on the MCS or the constellation diagram, refer to the related descriptions of step S802. Details are not described herein again.

Further, a type of parameter (for example, the modulation order or the clipping threshold) in the transmission parameter may correspond to a plurality of power offset proportion coefficients, that is, one value of the type of parameter may correspond to a plurality of power offset proportion coefficients. Further, the first apparatus may select a power offset proportion coefficient from the plurality of power offset proportion coefficients as the power offset proportion coefficient between the data signal and the DMRS. For details, refer to the related descriptions of step S802. Details are not described herein again.

In a possible implementation, the candidate power offset proportion coefficient set may be configured by the second apparatus for the first apparatus. For example, when the second apparatus is a network device and the first apparatus is a terminal device, the candidate power offset proportion coefficient set may be configured by using RRC signaling and/or DCI signaling. Alternatively, the candidate power offset proportion coefficient may be configured by using a MAC control element (MAC control element, MAC CE).

For another example, when the second apparatus is a terminal device and the first apparatus is a network device, the candidate power offset proportion coefficient set may be notified by the second apparatus to the first apparatus by using uplink control information (uplink control information, UCI).

In other words, before receiving the data signal from the second apparatus, the first apparatus may determine, in advance, the transmission parameter used to transmit the signal, and then determine, in advance based on the transmission parameter, the power offset proportion coefficient corresponding to the signal. In other words, step S805 may be performed before step S803. Certainly, the first apparatus may alternatively perform step S805 when receiving the data signal or after receiving the data signal. In other words, step S805 may be performed at the same as step S803, or performed after step S803. This is not specifically limited in embodiments of this application.

For step S806:

In a possible implementation, that the first apparatus determines, based on the power offset proportion coefficient, the constellation point corresponding to the symbol includes the following steps.

Step A: The first apparatus adjusts, based on the power offset proportion coefficient, the coordinate point corresponding to the symbol in the constellation diagram. The constellation diagram is a constellation diagram for modulating data carried in the data signal.

It may be understood that, that the first apparatus modulates, based on the power offset proportion coefficient, the coordinate point corresponding to the symbol in the constellation diagram may alternatively be expressed as follows: The first apparatus adjusts, based on the power offset proportion coefficient, the modulus value or the Euclidean distance value corresponding to the symbol.

Step B: The first apparatus determines, based on an adjusted coordinate point corresponding to the symbol in the constellation diagram, the constellation point corresponding to the symbol.

It may be understood that an offset that needs to be compensated for the symbol may be determined based on the power offset proportion coefficient. The offset may be a modulus value or a Euclidean distance value, so that the coordinate point corresponding to the symbol in the constellation diagram may be adjusted based on the modulus value or the Euclidean distance value.

For example, the power offset proportion coefficient is 7/10, and the first apparatus may amplify the modulus value or the Euclidean distance value corresponding to the symbol by 10/7 times.

In other words, adjusting, based on the power offset proportion coefficient, the coordinate point corresponding to the symbol in the constellation diagram can reduce an offset between the coordinate point corresponding to the symbol in the constellation diagram and an actual constellation point corresponding to the symbol in the constellation diagram, so that a probability that the symbol is incorrectly determined as another constellation point is reduced.

In another possible implementation, that the first apparatus determines, based on the power offset proportion coefficient, the constellation point corresponding to the symbol includes the following steps.

Step C: The first apparatus adjusts distribution of constellation points in the constellation diagram based on the power offset proportion coefficient.

Step D: The first apparatus determines, based on adjusted distribution of the constellation points in the constellation diagram, the constellation point corresponding to the symbol.

It may be understood that the first apparatus may determine the constellation point corresponding to the symbol by adjusting the distribution of the constellation points in the constellation diagram, without adjusting the coordinate point corresponding to the symbol in the constellation diagram.

For example, the power offset proportion coefficient is 7/10, and the first apparatus may proportionally reduce a modulus value corresponding to each constellation point in the constellation diagram by 7/10.

Specifically, the constellation diagram is the 64QAM constellation diagram shown in FIG. 5. A constellation point (namely, a black-filled dot) in the constellation diagram may be proportionally scaled down by 7/10, so that a constellation point obtained through proportional scaling down is close to an unfilled dot in FIG. 5 (namely, a coordinate point corresponding to an original modulated symbol on which proportional scaling down is performed in the constellation diagram). In this way, an offset between the coordinate point corresponding to the symbol in the constellation diagram and an actual constellation point corresponding to the symbol in the constellation diagram can be reduced, so that a probability that the symbol is incorrectly determined as another constellation point can be reduced.

It may be understood that, as described in the related descriptions of steps S802 and S805, the power offset proportion coefficient may alternatively be indicated by the second apparatus. The following specifically describes a manner in which the second apparatus indicates the power offset proportion coefficient.

In a possible implementation, as shown in FIG. 8, the signal transmission method provided in this embodiment of this application further includes the following step:

S807: The second apparatus sends indication information to the first apparatus. Correspondingly, the first apparatus receives the indication information from the second apparatus. The indication information indicates the power offset proportion coefficient.

It may be understood that, when the second apparatus sends the data signal, the second apparatus may determine the clipping threshold used for the data signal, so that the second apparatus can accurately determine the offset between the coordinate point corresponding to the symbol in the constellation diagram and the actual constellation point corresponding to the symbol. In other words, the power offset proportion coefficient indicated by the second apparatus is more accurate, so that the first apparatus further reduces the offset between the coordinate point corresponding to the symbol in the constellation diagram and the actual constellation point corresponding to the symbol.

Further, the indication information may directly indicate a specific value corresponding to the power offset proportion coefficient, for example, 1/2 or -3 dB.

In a possible implementation, the indication information may be carried in an RRC setup (RRC setup) message, an RRC resume (RRC resume) message, or an RRC reconfiguration (RRC reconfiguration) message.

It should be understood that the indication information in step S807 may be used together with the candidate offset proportion coefficient set in step S802 or step S805 to indicate the power offset proportion coefficient.

In a possible implementation, the indication information includes first indication information, and the first indication information is used to determine the power offset proportion coefficient from the candidate power offset proportion coefficient set. The first indication information may be an index of the power offset proportion coefficient. It may be understood that the first indication information may be an index of the power offset proportion coefficient in the candidate power offset proportion coefficient set. In other words, the first apparatus may determine the power offset proportion coefficient from the candidate power offset proportion coefficient set based on the first indication information.

In a possible implementation, the candidate power offset proportion coefficient set may be preconfigured.

Alternatively, in another possible implementation, the candidate power offset proportion coefficient set may be indicated. For example, when the first apparatus is a terminal device and the second apparatus is a network device, the candidate power offset proportion coefficient set may be indicated by the second apparatus.

Further, in a possible implementation, the indication information further includes second indication information, and the second indication information indicates the candidate power offset proportion coefficient set. In other words, the candidate power offset proportion coefficient set may be configured for the first apparatus by using the second indication information.

Further, in a possible implementation, the first indication information is carried in the DCI or the MAC CE, and the second indication information is carried in the RRC signaling.

In other words, the second apparatus may indicate the power offset proportion coefficient by using the RRC signaling and the DCI signaling or by using the RRC signaling and the MAC CE.

It may be understood that, indexes in one-to-one correspondence with the plurality of power offset proportion coefficients in the candidate power offset proportion coefficient set may be configured, so that indication overheads can be reduced when the indexes are used for indication. Further, the index of the power offset proportion coefficient may be a number, a letter, or another symbol. The indexes of the power offset proportion coefficients may be sorted in ascending order or in descending order based on numeric values, and the sorting may start from zero or another non-zero value.

The plurality of power offset proportion coefficients shown in Table 6 are used as an example, and Table 7 shows a correspondence between an index and a power offset proportion coefficient.

Table 7

| Index | Power offset proportion coefficient |
|---|---|
| U1 | 0 dB |
| U2 | -1 dB |
| U3 | -2 dB |
| U4 | -3 dB |

(continued)

| Index | Power offset proportion coefficient |
|---|---|
| U5 | -4.77 dB |

It may be further understood that different indexes may alternatively correspond to a same power offset value. For example, the indexes in Table 7 may further include an index U6, and the index U6 may correspond to the power offset proportion coefficient of -4.77 dB. In other words, the indexes U5 and U6 indicate the same power offset proportion coefficient.

It may be further understood that the indication information may include one or more indexes, that is, the second apparatus may indicate one or more power offset proportion coefficients to the first apparatus. Further, when the indication information indicates a plurality of power offset proportion coefficients, the first apparatus may select one power offset proportion coefficient from the plurality of power offset proportion coefficients. For example, the first apparatus may select an appropriate power offset proportion coefficient from the plurality of power offset proportion coefficients based on factors such as a performance parameter and a working condition of a receiving device.

It should be understood that, when the power offset proportion coefficient is associated with the transmission parameter used to transmit the data signal, the index may also be associated with the transmission parameter used to transmit the data signal. It may be understood that when the index is further associated with the transmission parameter used to transmit the data signal, some unknown transmission parameters may be further determined based on indexes.

Table 6 is used as an example, and Table 8 shows a correspondence between an index, a modulation order, a clipping threshold, and a power offset proportion coefficient.

Table 8

| Index | Modulation order | Clipping threshold (proportion value) | Power offset proportion coefficient |
|---|---|---|---|
| U1 | 2 | 0.2 | 0 dB |
| U2 | | 0.5 | -1 dB |
| U3 | 4 | 0.2 | -2 dB |
| U4 | | 0.5 | -3 dB |
| U5 | 8 | 0.2 | -4.77 dB |
| U6 | | 0.5 | |

As shown in Table 8, when the second apparatus sends the data signal and the indication information to the first apparatus, the first apparatus may determine, based on the index, the clipping threshold used by the second apparatus to send the data signal. It may be understood that the clipping threshold used by the second apparatus to send the data signal may not be the same as a clipping threshold corresponding to the index, but may be close to the clipping threshold corresponding to the index.

Further, when the indication information indicates a plurality of power offset proportion coefficients, the first apparatus may select a more appropriate power offset proportion coefficient from the plurality of power offset proportion coefficients based on the clipping threshold indicated by the index, to further reduce the offset between the coordinate point corresponding to the symbol in the constellation diagram and the actual constellation point corresponding to the symbol.

It may be understood that, with reference to Table 2 to Table 5 in step S802, the indication information may indicate the power offset proportion coefficients $\Delta Th$ in Table 2 to Table 5, to update Table 2 to Table 5, so as to update the power offset proportion coefficients.

In this embodiment of this application, when demodulating the symbol carried in the data signal, the first apparatus determines, based on the power offset proportion coefficient between the data signal and the DMRS, the constellation point corresponding to the symbol, so that an offset between a coordinate point corresponding to the symbol in a constellation diagram and an actual constellation point corresponding to the symbol in the constellation diagram can be reduced based on the power offset proportion coefficient, to reduce a probability that the symbol is incorrectly determined as another constellation point. Therefore, according to the signal transmission method provided in this embodiment of this application, a bit error rate in a data signal transmission process can be reduced.

The actions of the first apparatus in steps S801 to S807 may be performed by the processor 701 in the communication apparatus 700 shown in FIG. 7 by invoking the application program code stored in the memory 703, to indicate the communication apparatus 700 to perform the actions. The actions of the second apparatus in steps S801 to S807 may be performed by the processor 701 in the communication apparatus 700 shown in FIG. 7 by invoking the application program code stored in the memory 703, to indicate the communication apparatus 700 to perform the actions. This is not limited in embodiments of this application.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the first apparatus in the foregoing method embodiments, or an apparatus including the first apparatus, or a component that can be used in the first apparatus. Alternatively, the communication apparatus may be the second apparatus in the foregoing method embodiments, or an apparatus including the second apparatus, or a component that can be used in the second apparatus. It may be understood that, to implement the foregoing functions, the communication apparatus includes a corresponding hardware structure and/or software module for performing each function. A person skilled in the art should be easily aware that, in combination with units and algorithm steps of the examples described in embodiments disclosed in this specification, this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be understood that module division in embodiments of this application is an example, and is only logical function division. During actual implementation, there may be another division manner.

For example, the communication apparatus is the first apparatus in the foregoing method embodiments. FIG. 9 is a diagram of a structure of a first apparatus 900. The first apparatus 900 includes a transceiver module 901 and a processing module 902. The transceiver module 901 may also be referred to as a transceiver unit, configured to implement a transceiver function, for example, may be a transceiver circuit, a transceiver machine, a transceiver, or a communication interface.

The transceiver module 901 is configured to receive a data signal and a DMRS. The processing module 902 is configured to obtain, based on the data signal and the DMRS, a symbol carried in the data signal. The processing module 902 is further configured to determine a power offset proportion coefficient between the data signal and the DMRS. The processing module 902 is further configured to determine, based on the power offset proportion coefficient, a constellation point corresponding to the symbol.

In some embodiments, the processing module 902 is further configured to determine the power offset proportion coefficient from a candidate power offset proportion coefficient set based on a transmission parameter. The candidate power offset proportion coefficient set is preconfigured, or the candidate power offset proportion coefficient set is indicated.

In some embodiments, the processing module 902 is further configured to: adjust, based on the power offset proportion coefficient, a coordinate point corresponding to the symbol in a constellation diagram, and determine, based on an adjusted coordinate point corresponding to the symbol in the constellation diagram, the constellation point corresponding to the symbol, where the constellation diagram is a constellation diagram used to modulate data carried in the data signal.

In some embodiments, the processing module 902 is further configured to adjust distribution of constellation points in the constellation diagram based on the power offset proportion coefficient, and determine, based on adjusted distribution of the constellation points in the constellation diagram, the constellation point corresponding to the symbol, where the constellation diagram is the constellation diagram used to modulate the data carried in the data signal.

All related content of the steps in the foregoing method embodiments may be cited in function descriptions of a corresponding functional module. Details are not described herein again.

In this embodiment of this application, the first apparatus 900 is presented in a form of functional modules obtained through division in an integrated manner. The "module" herein may be a specific ASIC, a circuit, a processor that executes one or more software or firmware programs and a memory, an integrated logic circuit, and/or another device that can provide the foregoing functions. In a simple embodiment, a person skilled in the art may figure out that the first apparatus 900 may be in a form of the communication apparatus 700 shown in FIG. 7.

For example, the processor 701 in the communication apparatus 700 shown in FIG. 7 may invoke the computer-executable instructions stored in the memory 703, so that the communication apparatus 700 performs the signal transmission method in the foregoing method embodiments.

Specifically, functions/implementation processes of the transceiver module 901 and the processing module 902 in FIG. 9 may be implemented by the processor 701 in the communication apparatus 700 shown in FIG. 7 by invoking the computer-executable instructions stored in the memory 703. Alternatively, a function/an implementation process of the processing module 902 in FIG. 9 may be implemented by the processor 701 in the communication apparatus 700 shown in FIG. 7 by invoking the computer-executable instructions stored in the memory 703, and a function/an implementation process of the transceiver module 901 in FIG. 9 may be implemented by the communication interface 704 in the communication apparatus 700 shown in FIG. 7.

Because the first apparatus 900 provided in this embodiment of this application may perform the signal transmission method, for technical effect that can be obtained by the first apparatus 900, refer to the foregoing method embodiments. Details are not described herein again.

Alternatively, for example, the communication apparatus is the second apparatus in the foregoing method embodiments. FIG. 10 is a diagram of a structure of a second apparatus 100. The second apparatus 100 includes a transceiver module 1001 and a processing module 1002. The transceiver module 1001 may also be referred to as a transceiver unit, configured to implement a transceiver function, for example, may be a transceiver circuit, a transceiver machine, a transceiver, or a communication interface.

The processing module 1002 is configured to generate a data signal and a DMRS, where the data signal is a data signal on which clipping processing is performed. The processing module 1002 is further configured to determine a power offset proportion coefficient between the data signal and the DMRS. The transceiver module 1001 is configured to send the data signal and the DMRS based on the power offset proportion coefficient.

In some embodiments, the transceiver module 1001 is further configured to send indication information, where the indication information indicates the power offset proportion coefficient.

All related content of the steps in the foregoing method embodiments may be cited in function descriptions of a corresponding functional module. Details are not described herein again.

In this embodiment of this application, the second apparatus 100 is presented in a form of functional modules obtained through division in an integrated manner. The "module" herein may be a specific ASIC, a circuit, a processor that executes one or more software or firmware programs and a memory, an integrated logic circuit, and/or another device that can provide the foregoing functions. In a simple embodiment, a person skilled in the art may figure out that the second apparatus 100 may be in a form of the communication apparatus 700 shown in FIG. 7.

For example, the processor 701 in the communication apparatus 700 shown in FIG. 7 may invoke the computer-executable instructions stored in the memory 703, so that the communication apparatus 700 performs the signal transmission method in the foregoing method embodiments.

Specifically, functions/implementation processes of the transceiver module 1001 and the processing module 1002 in FIG. 10 may be implemented by the processor 701 in the communication apparatus 700 shown in FIG. 7 by invoking the computer-executable instructions stored in the memory 703. Alternatively, a function/an implementation process of the processing module 1002 in FIG. 10 may be implemented by the processor 701 in the communication apparatus 700 shown in FIG. 7 by invoking the computer-executable instructions stored in the memory 703, and a function/an implementation process of the transceiver module 1001 in FIG. 10 may be implemented by the communication interface 704 in the communication apparatus 700 shown in FIG. 7.

Because the second apparatus 100 provided in this embodiment may perform the signal transmission method, for technical effect that can be obtained by the second apparatus 100, refer to the foregoing method embodiments. Details are not described herein again.

It should be understood that one or more of the modules or units may be implemented by software, hardware, or a combination thereof. When any one of the foregoing modules or units is implemented by software, the software exists in a form of computer program instructions, and is stored in a memory. A processor may be configured to execute the program instructions and implement the foregoing method procedures. The processor may be built into a SoC (system on chip) or an ASIC, or may be an independent semiconductor chip. In addition to the cores used to execute the software instructions to perform calculation or processing, the processor may further include a necessary hardware accelerator, for example, a field programmable gate array (field programmable gate array, FPGA), a PLD (programmable logic device), or a logic circuit implementing dedicated logical calculation.

When the foregoing modules or units are implemented by hardware, the hardware may be any one or any combination of a CPU, a microprocessor, a digital signal processor (digital signal processor, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments. In a possible design, the communication apparatus further includes a memory. The memory is configured to store necessary program instructions and data. The processor may invoke program code stored in the memory, to indicate the communication apparatus to perform the method in any one of the foregoing method embodiments. Certainly, the communication apparatus may not include a memory. When the communication apparatus is a chip system, the communication device may include a chip, or may include a chip and another discrete device. This is not specifically limited in embodiments of this application.

Optionally, an embodiment of this application further provides a computer-readable storage medium. The computer-readable storage medium stores a computer program or instructions. When the computer program or the instructions are run on a communication apparatus, the communication apparatus is enabled to perform the method in any one of the foregoing method embodiments or any implementation of the foregoing method embodiments.

Optionally, an embodiment of this application further provides a communication system. The communication system includes the first network device in the foregoing method embodiments and the terminal device in the foregoing method embodiments.

All or some of the foregoing embodiments may be implemented by using software, hardware, firmware, or any combination thereof. When a software program is used for implementation, all or some of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or step, and "a" or "one" does not exclude a plurality. A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations, or equivalents that cover the scope of this application. It is clear that a person skilled in the art can make various modifications and variations to this application without departing from the spirit and scope of this application. In this case, if the modifications and variations made to this application fall within the scope of the claims of this application and their equivalent technologies, this application is intended to include these modifications and variations.

**Claims**

1. A signal transmission method, wherein the method comprises:

   receiving a data signal and a demodulation reference signal DMRS;
   obtaining, based on the data signal and the DMRS, a symbol carried in the data signal;
   determining a power offset proportion coefficient between the data signal and the DMRS; and
   determining, based on the power offset proportion coefficient, a constellation point corresponding to the symbol.

2. The method according to claim 1, wherein the power offset proportion coefficient is a transmit power ratio of the data signal to the DMRS; or

   the power offset proportion coefficient is an energy per resource element EPRE ratio of the data signal to the DMRS; or
   the power offset proportion coefficient is a logarithmic value, and the power offset proportion coefficient is a difference between the transmit power ratio and a preconfigured transmit power ratio; or
   the power offset proportion coefficient is a linear value, and the power offset proportion coefficient is a ratio of the transmit power ratio to the preconfigured transmit power ratio, wherein
   the preconfigured transmit power ratio is an EPRE ratio of a physical data channel carrying the data signal to the DMRS.

3. The method according to claim 1 or 2, wherein the power offset proportion coefficient is preconfigured, or the power offset proportion coefficient is indicated.

4. The method according to any one of claims 1 to 3, wherein the power offset proportion coefficient is associated with a transmission parameter used to transmit the signal, and the transmission parameter comprises one or more of the following:
a modulation and coding scheme MCS used to transmit the data signal, a modulation scheme used to transmit the data signal, a constellation diagram used to transmit the data signal, a modulation order used to transmit the data signal, or a clipping threshold used to perform clipping processing on the data signal.

5. The method according to claim 4, wherein the power offset proportion coefficient is in an inverse proportion to the clipping threshold.

6. The method according to claim 4 or 5, wherein the power offset proportion coefficient is determined based on the clipping threshold.

7. The method according to any one of claims 4 to 6, wherein when the modulation order is less than or equal to a first threshold, the power offset proportion coefficient is 1.

8. The method according to any one of claims 4 to 7, wherein the modulation order is in an inverse proportion to the clipping threshold.

9. The method according to any one of claims 4 to 8, wherein the MCS is in an inverse proportion to the clipping threshold.

10. The method according to any one of claims 4 to 9, wherein determining the power offset proportion coefficient between the data signal and the DMRS comprises:
determining the power offset proportion coefficient from a candidate power offset proportion coefficient set based on the transmission parameter, wherein the candidate power offset proportion coefficient set is preconfigured, or the candidate power offset proportion coefficient set is indicated.

11. The method according to any one of claims 1 to 10, wherein determining, based on the power offset proportion coefficient, the constellation point corresponding to the symbol comprises:

   adjusting, based on the power offset proportion coefficient, a coordinate point corresponding to the symbol in the constellation diagram, wherein the constellation diagram is a constellation diagram used to modulate data carried in the data signal, and
   determining, based on an adjusted coordinate point corresponding to the symbol in the constellation diagram, the constellation point corresponding to the symbol; or
   adjusting distribution of constellation points in the constellation diagram based on the power offset proportion coefficient, and
   determining, based on adjusted distribution of the constellation points in the constellation diagram, the constellation point corresponding to the symbol.

12. A signal transmission method, wherein the method comprises:

   generating a data signal and a demodulation reference signal DMRS, wherein the data signal is a data signal on which clipping processing is performed;
   determining a power offset proportion coefficient between the data signal and the DMRS; and
   sending the data signal and the DMRS based on the power offset proportion coefficient.

13. The method according to claim 12, wherein the power offset proportion coefficient is a transmit power ratio of the data signal to the DMRS; or

   the power offset proportion coefficient is an energy per resource element EPRE ratio of the data signal to the DMRS; or
   the power offset proportion coefficient is a logarithmic value, and the power offset proportion coefficient is a difference between the transmit power ratio and a preconfigured transmit power ratio; or
the power offset proportion coefficient is a linear value, and the power offset proportion coefficient is a ratio of the transmit power ratio to the preconfigured transmit power ratio, wherein
the preconfigured transmit power ratio is an EPRE ratio of a physical data channel carrying the data signal to the DMRS.

14. The method according to claim 12 or 13, wherein the power offset proportion coefficient is associated with a transmission parameter used to transmit the signal, and the transmission parameter comprises one or more of the following:
a modulation and coding scheme MCS used to transmit the data signal, a modulation scheme used to transmit the data signal, a constellation diagram used to transmit the data signal, a modulation order used to transmit the data signal, or a clipping threshold used to perform clipping processing on the data signal.

15. The method according to claim 14, wherein the power offset proportion coefficient is in an inverse proportion to the clipping threshold.

16. The method according to claim 14 or 15, wherein the power offset proportion coefficient is determined based on the clipping threshold.

17. The method according to any one of claims 14 to 16, wherein when the modulation order is less than or equal to a first threshold, the power offset proportion coefficient is 1.

18. The method according to any one of claims 14 to 17, wherein the modulation order is in an inverse proportion to the clipping threshold.

19. The method according to any one of claims 14 to 18, wherein the MCS is in an inverse proportion to the clipping threshold.

20. The method according to any one of claims 12 to 19, wherein the method further comprises:
sending indication information, wherein the indication information indicates the power offset proportion coefficient.

21. The method according to claim 19, wherein the indication information comprises first indication information, the first indication information is used to determine the power offset proportion coefficient from a candidate power offset proportion coefficient set, and the candidate power offset proportion coefficient set is preconfigured, or the candidate power offset proportion coefficient set is indicated.

22. The method according to claim 21, wherein the candidate power offset proportion coefficient set is indicated, the indication information further comprises second indication information, and the second indication information indicates the candidate power offset proportion coefficient set.

23. The method according to claim 22, wherein the first indication information is carried in downlink control information DCI or a media access control control element MAC CE, and the second indication information is carried in radio resource control RRC signaling.

24. The method according to claim 20, wherein the indication information is carried in an RRC setup message, an RRC resume message, or an RRC reconfiguration message.

25. A communication apparatus, wherein the communication apparatus comprises a processing module and a transceiver module, wherein

the transceiver module is configured to receive a data signal and a demodulation reference signal DMRS;
the processing module is configured to obtain, based on the data signal and the DMRS, a symbol carried in the data signal;
the processing module is further configured to determine a power offset proportion coefficient between the data signal and the DMRS; and
the processing module is further configured to determine, based on the power offset proportion coefficient, a constellation point corresponding to the symbol.

26. The communication apparatus according to claim 25, wherein the power offset proportion coefficient is a transmit power ratio of the data signal to the DMRS; or

the power offset proportion coefficient is an energy per resource element EPRE ratio of the data signal to the DMRS; or
the power offset proportion coefficient is a logarithmic value, and the power offset proportion coefficient is a difference between the transmit power ratio and a preconfigured transmit power ratio; or
the power offset proportion coefficient is a linear value, and the power offset proportion coefficient is a ratio of the transmit power ratio to the preconfigured transmit power ratio, wherein
the preconfigured transmit power ratio is determined based on the EPRE ratio of the data signal to the DMRS.

27. The communication apparatus according to claim 25 or 26, wherein the power offset proportion coefficient is preconfigured, or the power offset proportion coefficient is indicated.

28. The communication apparatus according to any one of claims 25 to 26, wherein the power offset proportion coefficient is associated with a transmission parameter used to transmit the signal, and the transmission parameter comprises one or more of the following:
a modulation and coding scheme MCS used to transmit the data signal, a modulation scheme used to transmit the data signal, a constellation diagram used to transmit the data signal, a modulation order used to transmit the data signal, or a clipping threshold used to perform clipping processing on the data signal.

29. The communication apparatus according to claim 28, wherein the power offset proportion coefficient is in an inverse proportion to the clipping threshold.

30. The communication apparatus according to claim 28 or 29, wherein the power offset proportion coefficient is determined based on the clipping threshold.

31. The communication apparatus according to any one of claims 28 to 30, wherein when the modulation order is less than or equal to a first threshold, the power offset proportion coefficient is 1.

32. The communication apparatus according to any one of claims 28 to 31, wherein the modulation order is in an inverse proportion to the clipping threshold.

33. The communication apparatus according to any one of claims 28 to 32, wherein the MCS is in an inverse proportion to the clipping threshold.

34. The communication apparatus according to any one of claims 28 to 33, wherein the processing module is further configured to determine the power offset proportion coefficient from a candidate power offset proportion coefficient set based on the transmission parameter, wherein the candidate power offset proportion coefficient set is preconfigured, or the candidate power offset proportion coefficient set is indicated.

35. The communication apparatus according to any one of claims 25 to 34, wherein the processing module is further configured to adjust, based on the power offset proportion coefficient, a coordinate point corresponding to the symbol in the constellation diagram, and determine, based on an adjusted coordinate point corresponding to the symbol in the constellation diagram, the constellation point corresponding to the symbol, wherein the constellation diagram is a constellation diagram used to modulate data carried in the data signal; or
the processing module is further configured to adjust distribution of constellation points in the constellation diagram based on the power offset proportion coefficient, and determine, based on adjusted distribution of the constellation points in the constellation diagram, the constellation point corresponding to the symbol.

36. A communication apparatus, wherein the communication apparatus comprises a processing module and a transceiver module, wherein

the processing module is configured to generate a data signal and a demodulation reference signal DMRS, wherein the data signal is a data signal on which clipping processing is performed;
the processing module is further configured to determine a power offset proportion coefficient between the data signal and the DMRS; and
the transceiver module is configured to send the data signal and the DMRS based on the power offset proportion coefficient.

37. The communication apparatus according to claim 36, wherein the power offset proportion coefficient is a transmit power ratio of the data signal to the DMRS; or

the power offset proportion coefficient is an energy per resource element EPRE ratio of the data signal to the DMRS; or
the power offset proportion coefficient is a logarithmic value, and the power offset proportion coefficient is a difference between the transmit power ratio and a preconfigured transmit power ratio; or
the power offset proportion coefficient is a linear value, and the power offset proportion coefficient is a ratio of the transmit power ratio to the preconfigured transmit power ratio, wherein
the preconfigured transmit power ratio is determined based on the EPRE ratio of the data signal to the DMRS.

38. The communication apparatus according to claim 36 or 37, wherein the power offset proportion coefficient is associated with a transmission parameter used to transmit the signal, and the transmission parameter comprises one or more of the following:
a modulation and coding scheme MCS used to transmit the data signal, a modulation scheme used to transmit the data signal, a constellation diagram used to transmit the data signal, a modulation order used to transmit the data signal, or a clipping threshold used to perform clipping processing on the data signal.

39. The communication apparatus according to claim 38, wherein the power offset proportion coefficient is in an inverse proportion to the clipping threshold.

40. The communication apparatus according to claim 38 or 39, wherein the power offset proportion coefficient is determined based on the clipping threshold.

41. The communication apparatus according to any one of claims 38 to 40, wherein when the modulation order is less than or equal to a first threshold, the power offset proportion coefficient is 1.

42. The communication apparatus according to any one of claims 38 to 41, wherein the modulation order is in an inverse proportion to the clipping threshold.

43. The communication apparatus according to any one of claims 38 to 42, wherein the MCS is in an inverse proportion to the clipping threshold.

44. The communication apparatus according to any one of claims 36 to 43, wherein the transceiver module is further configured to send indication information, wherein the indication information indicates the power offset proportion coefficient.

45. The communication apparatus according to claim 44, wherein the indication information comprises first indication information, the first indication information is used to determine the power offset proportion coefficient from a candidate power offset proportion coefficient set, and the candidate power offset proportion coefficient set is preconfigured, or the candidate power offset proportion coefficient set is indicated.

46. The communication apparatus according to claim 45, wherein the candidate power offset proportion coefficient set is indicated, the indication information further comprises second indication information, and the second indication information indicates the candidate power offset proportion coefficient set.

47. The communication apparatus according to claim 46, wherein the first indication information is carried in downlink control information DCI or a media access control control element MAC CE, and the second indication information is carried in radio resource control RRC signaling.

48. The communication apparatus according to claim 44, wherein the indication information is carried in an RRC setup message, an RRC resume message, or an RRC reconfiguration message.

49. A communication apparatus, wherein the communication apparatus comprises a processor and a storage medium, the storage medium stores instructions, and when the instructions are run by the processor, the signal transmission method according to any one of claims 1 to 11 or the signal transmission method according to any one of claims 12 to 24 is implemented.

**50.** A computer-readable storage medium, wherein the computer-readable storage medium comprises instructions, and when the instructions are run by a processor, the signal transmission method according to any one of claims 1 to 11 or the signal transmission method according to any one of claims 12 to 24 is implemented.

FIG. 1

FIG. 2

Vector $\vec{A}$

Vector $\vec{B}$

Amplified coordinate point

**FIG. 3**

Amplitude

Clipping threshold

Subcarrier index

**FIG. 4**

● Constellation point

○ Coordinate point of an original modulated symbol on which proportional scaling down is performed

Constellation point #2

Coordinate point of an original modulated symbol #1 on which proportional scaling down is performed

Constellation point #1

Offset

Q-axis

I-axis

FIG. 5

First apparatus — Second apparatus

FIG. 6

FIG. 7

First apparatus

Second apparatus

S801: Generate a data signal and a DMRS, where the data signal is a data signal on which clipping processing is performed

S802: Determine a power offset proportion coefficient between the data signal and the DMRS

S803: Send the data signal and the DMRS

S807: Indication information

S804: Obtain, based on the data signal and the DMRS, a symbol carried in the data signal

S805: Determine the power offset proportion coefficient between the data signal and the DMRS

S806: Determine, based on the power offset proportion coefficient, a constellation point corresponding to the symbol

FIG. 8

First apparatus 900

Transceiver module 901

Processing module 902

FIG. 9

Second apparatus 100

Transceiver module 1001

Processing module 1002

FIG. 10

## INTERNATIONAL SEARCH REPORT

| | International application No. |
|---|---|
| | **PCT/CN2023/106638** |

**A. CLASSIFICATION OF SUBJECT MATTER**

H04L 1/00(2006.01)i

According to International Patent Classification (IPC) or to both national classification and IPC

**B. FIELDS SEARCHED**

Minimum documentation searched (classification system followed by classification symbols)

IPC: H04L H04W H04Q H04B

Documentation searched other than minimum documentation to the extent that such documents are included in the fields searched

Electronic data base consulted during the international search (name of data base and, where practicable, search terms used)

CNTXT, DWPI, ENTXTC, CNKI, CJFD: 数据, 限幅, 幅度, 解调参考信号, DMRS, 功率, 能量, EPRE, 偏移, 比值, 星座, 调整, 更新, 修改, 坐标, data, clipping, amplitude, power, offset, ratio, constellation, adjust, update, modify

**C. DOCUMENTS CONSIDERED TO BE RELEVANT**

| Category* | Citation of document, with indication, where appropriate, of the relevant passages | Relevant to claim No. |
|---|---|---|
| X | CN 114900267 A (SICHUAN INNOGENCE TECHNOLOGY CO., LTD.) 12 August 2022 (2022-08-12) abstract, description, paragraphs 0044-0066, and figures 1-10 | 1-11, 25-35, 49-50 |
| Y | CN 114900267 A (SICHUAN INNOGENCE TECHNOLOGY CO., LTD.) 12 August 2022 (2022-08-12) abstract, description, paragraphs 0044-0066, and figures 1-10 | 12-24, 36-48 |
| Y | WO 2022235350 A1 (QUALCOMM INC.) 10 November 2022 (2022-11-10) abstract, description, paragraphs 0070-0095 and 0164-0172, and figures 1-15 | 12-24, 36-48 |
| A | CN 103326811 A (HUAWEI TECHNOLOGIES CO., LTD.) 25 September 2013 (2013-09-25) entire document | 1-50 |
| A | US 2023012494 A1 (QUALCOMM INC.) 19 January 2023 (2023-01-19) entire document | 1-50 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 December 2023** | **22 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/106638**

| Patent document cited in search report | | | Publication date (day/month/year) | Patent family member(s) | | | Publication date (day/month/year) |
|---|---|---|---|---|---|---|---|
| CN | 114900267 | A | 12 August 2022 | None | | | |
| WO | 2022235350 | A1 | 10 November 2022 | US | 11362694 | B1 | 14 June 2022 |
| CN | 103326811 | A | 25 September 2013 | None | | | |
| US | 2023012494 | A1 | 19 January 2023 | WO | 2023287592 | A1 | 19 January 2023 |

Form PCT/ISA/210 (patent family annex) (July 2022)